# EUROPEAN PATENT APPLICATION

(11) **EP 4 617 974 A1**
(43) Date of publication of application: **17.09.2025**
(21) Application number: 25161679.3
(22) Date of filing: 04.03.2025
(51) Int. Cl.: G06Q 10/0875, G06Q 50/08, E04G 1/36, G06F 21/64, G09F 3/03, H04L 9/32, G06K 7/10, G06Q 50/04

(54) **METHOD OF PRODUCTION AND STORAGE OF METAL SCAFFOLDING COMPONENTS, METHOD AND TRACKING SYSTEM OF SUCH METAL COMPONENTS AND RELATED SCAFFOLDING**

(30) Priority: 11.03.2024 IT 202400005413
(71) Applicant: Marcegaglia Buildtech S.r.l., 46040 Gazoldo Degli Ippoliti (MN) (IT)
(72) Inventor: RAGAZZI, Riccardo, 20132 Milano (IT); MISINO, Edoardo, 20841 Carate Brianza (MI) (IT); MARTINO, Umberto, 20900 Monza (MI) (IT); CASELLA, Attilio, 20146 Milano (IT)
(74) Representative: PGA S.p.A.

(57) **Abstract**

Method of manufacturing and storing (M1) metal components of scaffolding (1), comprising the following steps: manufacturing (F1) and arranging (F2) at least one plurality of metal components (10) for scaffolding (1); fixing (F3) to each metal component (10) of the corresponding plurality of components at least one identifier element (20) configured to be associated with one or more information data relating to the respective metal component (10), the at least one identifier element (20) presenting at least one univocal identifying information (A) configured to also univocally identify the corresponding metal component (10) on which it is fixed; creating (F4) a univocal digital twin (60) of each metal component (10) of the corresponding plurality of components, in a corresponding digital environment (B) where the digital environment (B) includes a computer network based on a blockchain technology or platform, the digital twins (60) being univocally created (F4) through a simultaneous and massive operation of detecting the identifying information (A) present in the at least one identifier element (20) of each metal component (10) manufactured and arranged, the creation step (F4) of each digital twin (60) comprising, or being followed by a creation operation (F4.4), for each digital twin (60), of a permanent register (R) of events (E), non-removable and non-erasable, in which each event (E) identifies a certain status condition of the respective metal component (10) and is entered into the respective permanent register (R), each event (E) entered by queuing one or more events (E) previously entered, each event (E) entered not being removable, erasable or editable; storing (F5) each metal component (10) of the related plurality of components, in a corresponding warehouse (103); interacting (F6) with the identifier element (20) of each metal component (10) by means of the respective at least one identifying information (A), to insert into the permanent register (R) of events (E) one or more events (E) each time the respective metal component (10) has a change of status, the permanent register (R) of events (E) relating to the digital twin (60) of each metal component (10) keeping track of each change of status thereof.

## Description

### Field of technique

The present invention relates to a method of manufacturing and storing metal scaffolding components.

The present invention also relates to a method and system for tracking metal scaffolding components from their manufacture to their delivery and/or sale to third parties or their transfer to physical locations other than storage.

It is also an object of the present invention to provide a scaffolding and a kit of metal components to define a scaffolding structure.

The object of the present invention is in the industrial field of manufacturing metal components deputed to the formation and composition of scaffolding.

### State of the art

In the construction industry, it is well known that scaffolding is used to provide access to all parts or areas of a building in order to facilitate the construction or renovation of building structures.

In order to provide safe access and simultaneously allow work at height on multiple levels, scaffolding of different types are installed that provide stable and safe platforms for the activities of workers and laborers, as well as for the safe transport of construction materials.

Generally, scaffolding are made up of a number of metal components of different shapes and sizes, including vertical uprights and horizontal crossing bars, sledgers, cross-supporting elements that provide a solid and stable base, bracings, planks, toeboards, and others. In the case of multidirectional type of scaffolding, appropriate rosettes or joints or connecting elements are also provided to allow quick and safe connections between components, as well as complex and articulated structural configurations.

Regardless of the type of scaffolding produced and used, scaffolding is characterized by a large number of components, the management of which, from the production and storage step to the installation on the construction sites and the final dismantling after the work has been completed, poses numerous problems.

On the front of the management of the components during the production and the immediate storage of the same after the production, it should be considered that the operations of inventory and management of the manufactured items prior to their respective storage, as well as the subsequent management of purchase and/or supply orders, take too much time, since the executing of the usual operations of control, counting, storage, recording of logistic data and the correct location of each component in the warehouse are carried out piece by piece, with a high probability of error.

In addition, all these operations are normally carried out by the operators who must count and check, pallet by pallet, the produced components before registering and storing them. Similarly, the storage step of the produced components is also carried out directly by the operators in charge, who must keep track of the correct placement of the components in the warehouse and update the total number of each type of component in stock. The same situation occurs in the supply management step, since the operators in charge of supplying and/or selling to third parties have to retrieve the inventoried components that are in the warehouse to check them before preparing the orders and/or orders received.

As mentioned above, these operations, in addition to being particularly tedious and alienating for the operators, involve long processing times with a high risk of error, as well as excessive use of resources, since in a high-productivity environment, with the management of a considerable number of components in production, storage and supply, it is essential to employ a considerable number of people to manage everything in a reasonable time.

It should also be considered that any error made by an operator in any of the above steps will inevitably have a knock-on effect, negatively affecting the subsequent steps. In fact, in the event that the number of components to be stocked is incorrect, the quantity of components in stock will be incorrectly indicated, with negative consequences during supply and/or sale step to third parties, since there will no longer be any correspondence between what is actually in stock and what appears to be in stock and available for orders to be placed.

In the event of an error in the warehousing or recording step of stored components, the retrieval of components for order fulfillment in the supply and/or sale step to third parties is inevitably compromised, since it is not possible to have immediate feedback on the location of the components to be retrieved in the warehouse or on the correct quantity these components are available, so that it is necessary to re-establish this information with a significant expenditure of time and resources.

### Purpose of the invention

The main purpose of the present invention is to solve one or more of the problems encountered in the known technique.

It is a purpose of the present invention to propose a method of production and storage of metal scaffolding components, as well as a method and system for tracking such metal components that can solve the problems found in the known technique.

It is also a purpose of the present invention to propose a scaffolding or kit of metal components for forming scaffolding, the production and subsequent storage of which can overcome the problems encountered in the known art.

It is also a purpose of the present invention to automate and speed up the entire process of manufacturing and storing metal scaffolding components.

It is also a purpose of the present invention to enable the monitoring of each metal scaffolding component from its manufacturing to its delivery to third parties by creating a permanent log of events, the events entered into which cannot be modified over time, such log being capable of receiving and recording only new events that queue up with previously recorded events.

These and other purposes, which will become more apparent from the following description, are substantially achieved by a method of production and storing metal scaffolding components, a method and system for tracking metal scaffolding components, a scaffolding, and a kit of metal scaffolding components according to what is expressed in one or more of the related claims and/or the following aspects, taken alone or in combination with each other or in combination with any of the related claims and/or in combination with any of the additional aspects or features described below.

### Summary of the invention

Aspects of the invention are described herein.

In a 1^{st} aspect, there is a method of production and storage (M1) of metal scaffolding components (1) that includes the following steps:
- manufacturing (F1) and arranging (F2) at least a plurality of metal components (10) for scaffolding (1);
- fixing (F3), on each metal component (10) of the respective plurality of components, at least one identifier element (20) configured to be associated with one or more information data relating to the respective metal component (10), the at least one identifier element (20) presenting at least one univocal identifying information (A) configured to also univocally identify the respective metal component (10) on which it is fixed;
- creating (F4) an univocal digital twin (60) of each metal component (10) of the related plurality of components, in a corresponding digital environment (B), the digital twins (60) of the metal components (10) of the related plurality of components being univocally created (F4) by a simultaneous and massive operation of detecting the identifying information (A) present in the at least one identifier element (20) of each metal component (10) manufactured and arranged;
- storing (F5) each metal component (10) of the related plurality of components in a corresponding warehouse (103)
- interacting (F6) with the at least one identifier element (20) of each metal component (10) by means of the at least one identifying information (A), to enter one or more informative data, each indicative of a change in a status condition of the respective metal component (10), in the respective digital twin (60).

In an additional independent aspect 1^{st} bis, which can be combined with the previous aspect and/or any one of the following aspects, it is provided a method of production and storage (M1) of metal components (10) of scaffolding (1) that includes the following steps:
- manufacturing (F1) and arranging (F2) at least a plurality of metal components (10) for scaffolding (1);
- fixing (F3) on each metal component (10) of the respective plurality of components, the at least one identifier element (20) configured to be associated with one or more information data relating to the respective metal component (10), the at least one identifier element (20) presenting at least one univocal identifying information (A) configured to also identify the respective metal component (10);
- creating (F4) an univocal digital twin (60) of each metal component (10) of the related plurality of components, in a corresponding digital environment (B), the digital twins (60) of the metal components (10) of the related plurality of components, being created by a simultaneous and massive operation of detecting (F4.1) of the univocal identifying information (A) present in the at least one identifier element (A) of each metal component (10), the step of creating (F4) each digital twin (60) comprising, or being followed by, a creation operation (F4.4), for each digital twin (60), of a permanent register (R) of events (E), non-removable and non-erasable, in which each event (E) identifies a certain status condition of the respective metal component (10) and is entered into the respective permanent register (R), each event (E) entered by queuing one or more previously **entered** events (E), each event (E) entered by being non-removable, erasable or editable, the univocal creation of a digital twin (60) in the corresponding digital environment (B) of each metal component (10) by allowing one or more of the following operations:
   ∘ count of the metal components (10) of the respective plurality of components manufactured and arranged, the number of metal components (10) of the respective plurality of components that are detected and identified being equal to the number of respective and univocal digital twins (10) created in the corresponding digital environment (B) corresponding to that plurality of components;
   ∘ total count of metal components (10) manufactured and arranged, the total number of metal components (10) manufactured and arranged being equal to the total number of virtual digital twins (60) created in the respective digital environment (B);
   ∘ total count of metal components (10) manufactured and arranged of the same type of components, in particular the same type of components means structurally identical metal components (10), the total number of metal components (10) manufactured and arranged of the same type being equal to the total number of digital twins (60) relating to the same type of components;
   ∘ entry of at least one event (E) indicative of a status condition of each metal component (10) of the respective plurality into the permanent register (R) of events (E) of the respective digital twin (60) created in the respective digital environment (B) through an interaction with the respective identifier element (20) and the respective at least one identifying information (A), at least one status condition being identifiable among one or more of the following conditions:
      ▪ occurred creation of the univocal and respective digital twin (60) in the corresponding digital environment (B) subsequent to the manufacture (F1) and arrangement (F2) of the corresponding metal component (10);
      ▪ occurred storage of the metal component (10) manufactured (F1) and arranged (F2) in a corresponding storage warehouse (103),
      ▪ occurred stationing of the metal component (10) stored in a relative stationing position (P) in the warehouse (103),
      ▪ occurrence of assignment of the metal component (10) stationed in the warehouse (103) to a respective fulfillment order (O), optionally the fulfillment order (O) being a delivery order to a third party or a sale to a third party or a transfer of stock from the warehouse (103) to another physical location other than the warehouse (103);
      ▪ occurred execution of the fulfillment order (O) of the metal component (10) from the corresponding warehouse (103), optionally the condition of execution of the fulfillment order (O) resulting in a consequent change of status of the corresponding warehouse (103) as it is emptied of the metal component (10) transferred from the warehouse (103) by the corresponding fulfillment order (O);
      ▪ actual physical location, in which the actual location of the metal component (10) along the production and storage chain is recorded, starting from the creation (F4) of the univocal and **respective** digital twin (60) in the corresponding digital environment (B) to at least the transfer of the same from the corresponding warehouse (103) through the execution of a corresponding fulfillment order (O);
      ▪ structural integrity, wherein the respective metal component (10) is indicated as either fit for use or unfit for use,
      ▪ ownership of the metal component (10), in which the name of the owner of that metal component (10) is recorded.

In an additional independent aspect 1^{st} ter, which can be combined with any of the previous aspects and/or any of the following aspects, it is provided a method for tracking (M2) metal components (10) of multidirectional scaffolding (1) from their manufacture and production (F1) to their delivery and/or sale to third parties or their stock transfer to a physical location other than a respective warehouse (103), the tracking method (M2) comprising the following steps:
- arranging (F2) a plurality of metal components (10) for scaffolding (1) previously manufactured (F1);
- fixing (F3) to each metal component (10) of the respective plurality of components, the at least one identifier element (20) configured to be associated with one or more information data relating to the respective metal component (10), the at least one identifier element (20) presenting at least one univocal identifying information (A) configured to univocally identify the corresponding metal component (10) as well;
- creating (F4) an univocal digital twin (60) of each metal component (10) of the respective plurality of components, in a corresponding digital environment (B), the digital twins (60) of the metal components (10) of the respective plurality of components being univocally created by a simultaneous and massive operation of detecting the univocal identifying information (A) present in the at least one identifier element (20) of each metal component (10) of the respective plurality of components;
- storing (F5) each metal component (10) in a corresponding warehouse (103);
- interacting (F6) with the at least one identifying element (A) of each metal component (10) by means of the respective at least one identifying information (A), to enter into the respective digital twin (60) of each metal component (10) one or more informative data each indicative of a change in a status condition of the corresponding metal component (10);
- optionally performing at least one upload (F7, F8) into the permanent event register (R) of events (E) relating to the digital twin (60) of each metal component (10) of the respective plurality components of a new event (E) related to at least one new status condition of the respective metal component (10), the at least one status condition being identifiable among one or more of the following conditions:
   ∘ actual physical location of the respective metal component (10), in which the actual location of the metal component (10) is recorded from the creation (F4) of the univocal and corresponding digital twin (60) in the corresponding digital environment (B) to at least the transfer thereof from the corresponding warehouse (103) through the execution of a corresponding fulfillment order (O);
   ∘ assignment of the metal component (10) stationed in the housing warehouse (103) to a corresponding fulfillment order (O), optionally, the fulfillment order (O) being a delivery order to a third party or a sale **to a third** party or a transfer of stock from the warehouse (103) to another physical location and different from the warehouse (103);
   o execution of the evasion order (O) of the metal component (10) from the corresponding warehouse (103), in particular the condition of execution of the evasion order (O) also resulting in a change of status of the warehouse (103), since it is emptied of the metal component (10) transferred by means of the evasion order (O).

In an additional independent aspect 1^{st} quater, which may be combined with any one of the previous aspects and/or any of the following aspects, there is a system for managing and tracking metal components (10) of a scaffolding (1) from their manufacture and production (F1) to their delivery and/or sale to third parties or their transfer of storage to a place other than a warehouse (103), the management and tracking system comprising:
- at least one detecting apparatus capable of simultaneously and massively detecting the univocal identification information (A) present in the at least one identifier element (20) of each of the at least one metal component (10) of the respective plurality of components arranged in an appropriate preparation station (100) wherein the at least one identifier element (20) of the management and tracking system is fixed on each metal component (10) of the respective plurality of components previously arranged (F2), the at least one identifier element (20) being associated with one or more information data related to the respective metal component (10) and presenting at least one univocal identifying information (A) configured to also identify the respective metal component (10);
- at least one digital environment (B) suitable for receiving one or more digital data and/or information relating to the metal components (10) of the respective plurality of components being submitted for detection by the detecting apparatus;
- at least one programmable electronic unit having at least one communication interface with the detecting apparatus and the digital environment (B) for automatically creating, in said digital environment (B), an univocal digital twin (60) univocally corresponding to each metal component (10) of the corresponding plurality of components being simultaneously detected by the detcting apparatus, the creation (F4) relating to the digital twin (60) of each metal component (10) of the corresponding plurality of components under detection, being carried out simultaneously as a result of the simultaneous detection of the univocal identifying information (A) of the identifier elements (20) fixed to the metal components (10) of the respective plurality of components;
wherein, at least one of the apparatuses of the system is arranged and configured for entering at least one status condition of each metal component (10) of the respective plurality into the respective digital twin (60), at least one status condition being identifiable among one or more of the following conditions:
▪ occurred creation of the univocal and corresponding digital twin (60) in the corresponding digital environment (B) following the manufacture (F1) and arrangement (F2) of the respective metal component (10);
▪ occurred storage of the metal component (10) manufactured (F1) and arranged (F2) in a corresponding storage warehouse (103),
▪ occurred stationing of the metal component (10) stored in a relative stationing position (P) in the warehouse (103),
▪ occurrence of assignment of the metal component (10) stationed in the warehouse (103) to a respective fulfillment order (O), optionally the fulfillment order (O) being a delivery order to a third party or a sale to a third party or a transfer of stock from the warehouse (103) to another physical location other than the warehouse (103);
▪ occurred execution of the fulfillment order (O) of the metal component (10) from the corresponding warehouse (103), optionally the condition of execution of the fulfillment order (O) resulting in a consequent change of status of the corresponding warehouse (103) as it is emptied of the metal component (10) transferred from the warehouse (103) by the corresponding fulfillment order (O);
▪ actual physical location, in which the actual location of the metal component (10) along the production and storage chain is recorded, starting from the creation (F4) of the univocal and corresponding digital twin (60) in the corresponding digital environment (B) to at least the transfer of the same from the corresponding warehouse (103) through the execution of a corresponding fulfillment order (O);
▪ structural integrity, in which the corresponding metal component (10) is indicated as either fit for use or unfit for use;
▪ ownership of the metal component (10), in which the name of the owner of that metal component (10) is recorded.

In a 2^{nd} aspect according to any one of the previous aspects, the manufacture step (F1) of each metal component (10) of the respective plurality of components comprises:
- a structural formation step (F1.1) of the metal component;
- a galvanizing step (F1.2) of the metal component previously structurally formed.

In a 3^{rd} aspect according to the previous aspect, the galvanizing step (F1.2) of each metal component (10) of the respective plurality of components is carried out hot, optionally the galvanizing step (F1.2) hot including a step of immersing each metal component of the respective plurality of components in a tank containing molten zinc, particularly at a temperature between 350° and 550°, preferably at about 450°.

In a 4^{th} aspect according to the 2^{nd} aspect, the galvanizing step (F1.2) of each metal component (10) of the respective plurality of components is carried out cold, optionally the galvanizing (F1.2) cold including at least one electrolytic galvanizing step with immersion of each metal component (10) of the respective plurality of components in a solution provided with zinc salts.

In a 5^{th} aspect according to any one of the previous three aspects, the manufacture (F1) of each metal component (10) of the related plurality of components also includes a bending or press-bending step (F1.3) in corresponding machines and/or calenders.

In a 6^{th} aspect according to any one of the previous four aspects, the manufacture (F1) of each metal component (10) of the respective plurality of components includes a cleaning or washing step (F1.4) of each metal component (10) of the respective plurality of components.

In a 7^{th} aspect according to the previous aspect, in which the cleaning or washing step (F1.4) of each metal component (10) of the respective plurality of components includes carrying out at least one chemical treatment, optionally, the chemical treatment of each metal component (10) of the respective plurality of components including one or more of the following treatments: degreasing; pickling; rinsing; and flushing.

In an 8^{th} aspect according to any one of the previous aspects, the manufacture (F1) and arrangement (F2) of the plurality of metal components (10) includes the manufacture (F1) and arrangement (F2) of metal components (10) of the same type, optionally of structurally identical metal components (10).

In a 9^{th} aspect according to any of the previous aspects, the manufacture (F1) and arrangement (F2) of the plurality of metal components (10) being preceded and/or followed by further steps of manufacture (F1) and arrangement (F2) of additional plurality of metal components (10), particularly of the same type, optionally structurally identical.

In a 10^{th} aspect according to any one of the previous aspects, the manufacture (F1) and arrangement (F2) of the plurality of metal components (10) being preceded and/or followed by further steps of manufacture (F1) and arrangement (F2) of further plurality of metal components (10), in particular, the metal components (10) of a specific plurality of components manufactured and arranged being of a different type, optionally structurally different, from the metal components (10) of another plurality of components manufactured (F1) and arranged (F2).

In an 11^{th} aspect according to any one of the previous aspects, the types of metal components (10) that can be manufactured by the manufacturing process include one or more of the following types: upright (11); frame (15); sledger/bracing (12) with respective clamp portions (12c); sledger/bracing (18) with engagement joints (18a), plank (13); toeboard (14); guardrail (16); finial (17), optionally, additional types different from the listed types being makeable by the same production and storage method.

In an 11^{th} bis aspect according to any one of the previous aspects, the step of fixing (F3) at least one identifier element (20) on each metal component (10) of a respective plurality of components manufacture and arranged includes fixing two or more identifier elements (20) on each metal component (10) of such plurality of components, each identifier element (20) fixed to the same metal component (10) presenting the same univocal identifying information (A)

In a 12^{th} aspect according to any one of the previous aspects, the at least one identifier element (20) fixed to each metal component (10) of the respective plurality of components includes a respective RFID Tag (30) having a respective and univocal non-modifiable EPC code that defines the univocal identifying information (A) of the respective identifier element (20)

In a 13^{th} aspect according to any one of the previous aspects, the step of fixing (F3) the at least one identifier element (20) on each metal component (10) of a respective plurality of components manufactured (F1) and arranged (F2) is performed by fixing at least one RFID Tag (30) on each metal component (10).

In a 14^{th} aspect according to any one of the previous two aspects, the RFID Tag (30) of each identifier element (20) is detectable by radio frequency, particularly by means of a UHF antenna or similar detecting apparatuses, optionally according to a detection range of 0.1 meters to 10 meters.

In a 15^{th} aspect according to any one of the previous three aspects, the RFID Tag (30) of each identifier element (20) is an anti-metal RFID Tag.

In a 16^{th} aspect according to any one of the previous four aspects, the RFID Tag (30) of each identifier element (20) has dimensions between 5x5 mm and 80x80 mm, optionally between 10x10 mm and 55x55 mm, more optionally between 13x13 mm and 52x52 mm, in particular between 36x13 mm and 52x13mm.

In a 17^{th} aspect according to any one of the previous five aspects, the RFID Tag (30) of each identifier element (20) is housed in a protective capsule (40) fixable on a respective metal component (10) of the respective plurality of components, optionally the RFID Tag (30) being housed in a respective housing seat (40a) made in the body of a respective protective capsule (40) fixable on a respective metal component (10) of the respective plurality of components.

In an 18^{th} aspect according to any one of the previous five aspects, the RFID tag of each identifier element (20) is embedded in the body of a corresponding protective capsule (40) that can be fixed on a respective metal component (10) of the respective plurality of components.

In a 19^{th} aspect according to any of the previous two aspects, the step of fixing an identifier element (20) to each metal component (10) of a respective plurality of components is carried out by fixing the corresponding RFID Tag (30) by fixing the latter's protective capsule (40) to the respective metal component (10).

In a 20^{th} aspect according to any one of the previous three aspects, wherein the protective capsule (10) of the RFID tag (30) of each identifier element (20) has at least one engagement surface (40b) arranged to accommodate at least one adhesive fixing substance, optionally the engagement surface (40b) being at least partially, preferably completely, countershaped to at least one outer surface portion of the corresponding metal component (10) of the plurality of components.

In a 21^{st} aspect according to any one of the previous four aspects, wherein the protective capsule (40) of the RFID tag (30) of each identifier element (20) has at least one hooking portion configured to hook at least one structural portion of the corresponding metal component (10) of the plurality of components.

In a 22^{nd} aspect according to any of the previous two aspects, the step of fixing at least one identifier element (20) on each metal component (10) of a respective plurality of components is carried out by fixing the respective RFID Tag (30) by means of bonding the respective protective capsule (40) on the respective metal component (10), the bonding of the protective capsule (40) on the corresponding metal component (10) being carried out at the engagement surface (40b) of such protective capsule (40).

In a 23^{rd} aspect according to any one of the previous two aspects, the step of fixing (F3) at least one identifier element (20) to each metal component (10) of a respective plurality of components is carried out by fixing at least one RFID Tag (30) by the interaction between the hooking portion of the respective protective capsule (40) of the RFID Tag (30) and a respective structural portion of the respective metal component (10).

In a 24^{th} aspect according to any one of the previous seven aspects, the protective capsule (40) of the RFID tag (30) of each identifier element (20) is made of a polymeric material.

In a 25^{th} aspect according to any one of the previous eight aspects, the protective capsule (40) of the RFID tag (30) of each identifier element (20) is made of TPU thermoplastic polyurethane.

In a 26^{th} aspect according to any one of the aspects from the 17^{th} aspect to the 24^{th} aspect, the protective capsule (40) of the RFID tag (30) of each identifier element (20) is made of acrylonitrile butadiene styrene ABS or high impact polystyrene HDPS or high density polyethylene HDPE or polycarbonate PC an amorphous thermopolymer and polycarbonate ASA/PC blend.

In a 26^{th} bis aspect according to any one of the previous ten aspects, the protective capsule (40) of the RFID tag (30) of each identifier element (20) is obtained by a forming process by additive manufacturing or injection molding or thermoforming.

In a 27^{th} aspect according to any of the previous eleven aspects, the protective capsule (40) of the RFID Tag (30) of each identifier element (20) has a hardness expressed in Shore A of not less than 80A, optionally not less than 90A, in particular substantially equal to 95A.

In a 28^{th} aspect according to the 20th aspect or any one of the previous eight aspects if dependent on the 20^{th} aspect or any one aspect that is dependent on the 20^{th} aspect, the adhesive fixing substance includes an epoxy glue or an acrylic or polyurethane glue.

In a 29^{th} aspect according to the 20^{th} aspect or any one of the previous nine aspects if dependent on the 20^{th} aspect or any one aspect that is dependent on the 20^{th} aspect, the adhesive fixing substance includes a one-component or two-component glue.

In a 30^{th} aspect according to the previous aspect, the bonding of the protective capsule (40) of the RFID Tag (30) of at least one identifier element (20) onto a respective metal component (10) is carried out according to the following steps:
- deposit the glue, which defines the adhesive fixing substance, on the corresponding engagement surface (40b) of the respective protective capsule (40) of the RFID Tag (30) of the at least one identifier element (20) to be fixed;
- placing the engagement surface (40b) of the respective protective capsule (40) of the RFID tag (30) of the at least one identifier element (20) to be fixed in contact with a respective outer surface portion of the respective metal component (10) of the plurality of metal components (10);
- maintaining the engagement surface (40b) of the respective protective capsule (10) of the RFID Tag (30) of the at least one identifier element (20) to be fixed, in contact with the respective outer surface portion of the respective metal component (10) of the respective plurality of components for a period of time sufficient to ensure complete curing of the glue, optionally a period of time of not less than 12 hours, more optionally not less than 18 hours, in particular not less than 24 hours, more in particular not less than 48 hours, preferably not less than 72 hours.

In a 31^{st} aspect according to the previous aspect, the glue deposit step, which defines the adhesive fixing substance, on the respective engagement surface (40b) of the respective protective capsule (40) of the RFID Tag of the at least one identifier element (20) to be fixed, is carried out by means of at least one application gun or respective application tool comprising at least one glue dispensing nozzle.

In a 32^{nd} aspect according to the 20^{th} aspect or any one of the aspects from the 21^{st} aspect to the 27^{th} aspect if dependent on the 20^{th} aspect or any one of the aspects that depend on the 20^{th} aspect, the adhesive fixing substance includes a double-sided tape, optionally epoxy-based or acrylic-based or polyurethane-based, more optionally in foam form.

In a 33^{rd} aspect according to the previous aspect, the bonding of the protective capsule (40) of the RFID Tag (30) of the at least one identifier element (20) on each metal component (10) is carried out according to the following steps:
- removing a first protective film from the double-sided tape to make a respective first adhesive portion of the double-sided tape available;
- applying the first adhesive portion of the double-sided tape to the corresponding engagement surface (40b) of the corresponding protective capsule (40) of the RFID Tag of the at least one identifier element (20) to be fixed;
- removing from a second adhesive portion of the applied double-sided tape, facing away from the first adhesive portion, a second protective film, to make the second adhesive portion available;
- placing the engagement surface (40b) of the corresponding protective capsule (40) of the RFID tag of the at least one identifier element (20) to be fixed in contact with a respective outer surface portion of the respective metal component (10) of the plurality of metal components in such a way that the second adhesive portion of the double-sided adhesive tape adheres at least partially, in particular completely, to the outer surface portion of the respective metal component (10);
- maintaining the engagement surface (40b) of the respective protective capsule (40) of the RFID Tag of the at least one identifier element (20) to be fixed, in contact with the respective outer surface portion of the respective metal component (10) of the corresponding plurality of components for a period of time sufficient to ensure complete polymerization of the adhesive substance of the double-sided tape, optionally a period of time of not less than 12 hours, more optionally not less than 18 hours, in particular not less than 24 hours, more in particular not less than 48 hours, preferably not less than 72 hours

In a 34^{th} aspect according to any one of the previous two aspects, the retention of the engagement surface (40b) of the respective protective capsule (40) of the RFID tag (30) of the at least one identifier element (20) to be fixed, in contact with the respective outer surface portion of the respective metal component (10) of the respective plurality of components for a period of time sufficient for the complete curing of the adhesive substance of the double-sided tape, is carried out by the use of at least one respective retention support , optionally at least one magnetic retention support

In a 35^{th} aspect according to any one of the previous aspects, the fixing of the at least one identifier element (20) on each metal component (10) of the respective plurality of components is carried by means of the use of at least one positioning tool.

In a 36^{th} aspect according to the previous aspect if dependent on the 34^{th} aspect, the positioning tool includes and/or defines the retention support or vice versa.

In a 37^{th} aspect according to any one of the previous sixteen aspects, the engagement surface (40b) of the protective capsule (40) of the RFID tag (30) of the at least one identifier element (20) to be fixed to each metal component (10) of the plurality of components thereof is subjected to at least one cleaning operation prior to accommodating the adhesive fixing substance, optionally the cleaning operation comprising at least one cleaning operation by isopropyl alcohol or a similar cleaning substance.

In an aspect 37^{th} bis according to any one of the aspects from the 17^{th} aspect to the 19^{th}, the step of fixing at least one identifier element (20) on each metal component (10) of a respective plurality of components is carried out by fixing the respective RFID Tag (30) by welding at least one metal structure associated with the respective protective capsule (40) on the respective metal component (10).

In an aspect 37^{th} ter according to the previous aspect, the welding of the at least one metal structure associated with the protective capsule (40) to the respective metal component (10) is carried out by a spot welding operation of at least one portion of the metal structure associated with the protective capsule, in particular of two or more portions of the metal structure associated with the protective capsule (40), optionally the portion of the metal structure associated with the protective capsule (40) and deputed to the welding emerging and protruding therefrom so as to adhere, at least partially, to the target surface of the respective metal component (10) upon the welding operation.

In an aspect 37^{th} quater according to the previous aspect, the metal structure of the protective capsule (40) comprises a one-piece plate, flat or arched depending on the target metal component (10) and the shape that the protective capsule (40) must have in order to be fixed to that metal component (10), the one-piece plate of which supports, particularly in direct contact, a respective RFID Tag (30) and has one or more fixing portions or appendages that emerge or protrude from the capsule itself to enable welding operations of the metal structure and, therefore, of the protective capsule (40) with the respective RFID Tag (30) to the respective metal component (10) of a scaffolding (1).

In an aspect 37^{th} quinquies according to the aspect 37^{th} ter, the metal structure of the protective capsule (40) comprises a one-piece plate, flat or arched depending on the target metal component (10) and the shape that the protective capsule (40) must have in order to be fixed to that metal component (10), supporting, in particular by direct contact, a respective RFID Tag (30), additional metal plates detached and separated from the one-piece plate of the metal structure that supports the RFID Tag (30) are provided and joined to the protective capsule 40, in particular by co-molding or by other bundling and joining techniques, in order to make available structural elements suitable for spot welding, on the respective metal component (10) of a scaffolding (1).

In an aspect 37^{th} sexies according to any one of the two previous aspects, the one-piece plate of the metal structure is co-molded to the protective capsule (40), whereby the main portion of the one-piece plate of that metal structure and the respective RFID Tag (30) carried thereby are contained, in particular hermetically, in a mutual adhesion relationship, by the protective capsule itself.

In an aspect 37^{th} septies according to any of the previous six aspects, the one-piece plate of the metal structure or any additional plate for spot welding is made of stainless steel.

In an aspect 37^{th} octies according to any of the previous seven aspects, the spot welding includes at least one resistance welding operation.

In an aspect 37^{th} novies according to any one of the previous eight aspects, the protective capsule (40) of the RFID tag (30) of each identifier element (20) is made of a polymeric material.

In an aspect 37^{th} decies according to any one of the previous nine aspects, the protective capsule (40) of the RFID tag (30) of each identifier element (20) is made of TPU thermoplastic polyurethane.

In an aspect 37^{th} undecies according to any one of the aspects from the aspect 37^{th} bis to the aspect 37^{th} novies, the protective capsule (40) of the RFID tag (30) of each identifier element (20) is made of acrylonitrile butadiene styrene ABS or high impact polystyrene HDPS or high density polyethylene HDPE or polycarbonate PC an blendamorphous thermopolymer and polycarbonate ASA/PC .

In an aspect 37^{th} duodecies according to any one of the previous eleven aspects, the protective capsule (40) of the RFID tag (30) of each identifier element (20) is obtained by a forming process by additive manufacturing or injection molding or thermoforming or co-molding.

In an aspect 37^{th} ter decies according to any one of the previous twelve aspects, the protective capsule (40) of the RFID Tag (30) of each six identifier element (20) has a hardness expressed in Shore A of not less than 80A, optionally not less than 90A, in particular substantially equal to 95A.

In a 38^{th} aspect according to any one of the previous aspects, the step of creating (F4) the univocal digital twin (60) of each metal component (10) of the respective plurality of components, in a corresponding digital environment (B), being performed by carrying out a simultaneous and massive operation of detecting (F4.1) the identifying information (A) of the identifier elements (20) fixed on the metal components (10) of the respective plurality of components.

In a 39^{th} aspect according to any of the previous aspects, the step of creating (F4) the univocal digital twin (60) of each metal component (10) of the respective plurality of components, in a corresponding digital environment (B), being carried out simultaneously with the creation of the univocal digital twin (60) of each metal component (10) of one or more additional pluralities of metal components (10).

In a 40^{th} aspect according to any one of the previous two aspects, the step of creating (F4) the univocal digital twin (60) of each metal component (10) of one or more plurality of components, in a corresponding digital environment (B), is carried out simultaneously and massively on metal components (10) of the same type, particularly structurally identical.

In a 41^{st} aspect according to any one of the previous three aspects, the step of creating the univocal digital twin (F4) of each metal component (10) of one or more plurality of components, in a corresponding digital environment (B), is carried out simultaneously and massively by passage of the respective metal components (10) through a detection gate (101) provided with at least one detecting apparatus, in particular operating in radio frequency, optionally by means of at least one UHF antenna, in particular the crossing of the detection gate (101) by the metal components (10) being carried out by simultaneously crossing all metal components (10) to be detected or according to a sequential crossing of groups of metal components (10) of the same plurality of components to be detected.

In a 42^{nd} aspect according to any one of the previous four aspects, the step of creating (F4) the univocal digital twin (60) of each metal component (10) of one or more plurality of components, in a corresponding digital environment (B), is carried out massively and simultaneously by the following steps:
- placing the metal components (10) of one or more plurality of manufactured and produced components within a corresponding confined detecting region (102) provided with one or more detecting apparatus, in particular operating in radio frequency, optionally by means of at least one UHF antenna, more optionally the confined detecting region (102) being limited by a controlled chamber;
- simultaneously and massively detecting all the univocal identification information (A) of the corresponding identifier elements (20) fixed on the respective metal components (10) in the confined detecting region(102).

In a 43^{rd} aspect according to any one of the previous five aspects, the step of simultaneously and massively creating (F4) the univocal digital twin (60) of each metal component (10) of one or more plurality of manufactured (F1) and arranged (F2) components is carried out by performing at least one simultaneous detection operation (F4.1) of the identification information (A) of the identifier elements (20) fixed on the metal components (10) under detection, the detection operation (F4.1) determining, for each metal component (10) under detection, the assignment, particularly automatically, of the univocal identification information (A) of the at least one respective identifier element (20) as the univocal identification information of the respective metal component (10).

In a 44^{th} aspect according to the previous aspect when dependent on the 41^{st} aspect, the simultaneous and massive detection operation (F4.1) of univocal identifying information (A) of the at least one identifier element (20) fixed on each metal component (10) of the respective plurality of components under detection is carried out by at least one detecting apparatus associated with the detection gate (101).

In a 45^{th} aspect according to the 43^{rd} aspect when dependent on the 41^{st} aspect, the simultaneous and massive detection operation (F4.1) of the univocal identifying information (A) of the at least one identifier element (20) fixed on each metal component (10) of the related plurality of components under detection is carried out by at least one active detecting apparatus at the confined detection region (102).

In a 46^{th} aspect according to any one of the previous two aspects, the at least one identifier element (20) fixed on each metal component (10) of the respective plurality of components comprises a respective RFID Tag (30) having a corresponding and univocal EPC code defining the univocal identifying information (A) of the respective identifier element (20), the at least one detecting apparatus being configured to detect the univocal EPC code of the respective RFID Tag (30) of the respective at least one identifier element (20) fixed on each metal component (10) of the respective plurality of components as the univocal identification information of the respective metal component (10) under detection, in particular the at least one detecting apparatus comprising at least one detecting antenna operating in radio frequency, optionally according to UHF frequencies.

In a 47^{th} aspect according to the previous aspect, in the case where two or more identifier elements (20) are fixed on a respective and same metal component (10) they have respective and identical univocal EPC codes, the simultaneous and massive detection operation (F4.1) of the univocal identification information (A) being carried out by detecting the univocal EPC code of the RFID Tag (30) of one of the identifier elements (20) fixed on the respective and same metal component (10) as being identical to the univocal EPC code of the RFID Tag (30) of every other identifier element (20) fixed on the same metal component (10).

In a 48^{th} aspect according to any one of the previous ten aspects, the step of creating (F4) massive and simultaneous univocal digital twin (60), in a corresponding digital environment (B), of each metal component (10) of the corresponding plurality of components under detection, also includes an operation of assigning (F4.3), to each digital twin (60) in creation, the corresponding type of metal components (10) under detection.

In a 49^{th} aspect according to the previous aspect, the step of creating (F4) massively and simultaneously the univocal digital twin (60), in a corresponding digital environment (B), of each metal component (10) of a respective plurality of components of the same type previously arranged, includes the steps of:
- simultaneously and massively detecting (F4.1) the univocal identifying information (A) of the at least one identifier element (20) fixed on each metal component (10) that undergoes the creation step (F4) of the corresponding and univocal digital twin (60) in the respective digital environment (B);
- assigning to each detected metal component (10) the univocal identifying information (A) of the respective at least one identifier element (20);
- creating (F4) simultaneously and massively, optionally automatically, in a corresponding digital environment (B), the digital twin (60) of each metal component (10), whose univocal identifying information (A) of the at least one respective identifier element (20) has been previously detected, the digital twin (60) of each metal component (10) being related to the univocal identifying information (A) of the at least one respective identifier element (20) of the respective metal component (10);
- assigning (F4.3) to each created digital twin (60), the respective type of the metal component (10), in particular the actual type, of the respective metal component (10), such that each univocal identifying information (A) corresponding to at least one identifier element (20) fixed to a respective metal component (10), also corresponds to a respective and univocal digital twin (60) relating to the same type of the respective metal component (10).

In a 50^{th} aspect according to any one of the previous twelve aspects, the massive and simultaneous creation step (F4) of each digital twin (60) in a corresponding digital environment (B) of each metal component (10) under detection includes, or is followed by, a creation operation (F4.4), for each created digital twin (60), of a permanent register (R) of events (E) in which one or more data relating to one or more changes of a status condition of the metal component (10) is entered.

In a 51^{st} aspect according to the previous aspect, the permanent register (R) of events (E) relating to the digital twin (20) of each metal component (10) is not removable or erasable.

In a 52^{nd} aspect according to any one of the previous two aspects, the permanent register (R) of events (E) related to the digital twin (60) of each metal component (10) is configured to receive on entry one or more events (E) related to one or more status changes of the respective metal component (10).

In a 53^{rd} aspect according to the previous aspect, each event (E) entered in the permanent event register (R) of events (E) relating to the digital twin (60) of each metal component (10) is queued to the event(s) (E) previously entered in the same register (R).

In a 54^{th} aspect according to any one of the previous two aspects, each event (E) entered into the permanent register (R) of events (E) relating to the digital twin (60) of each metal component (10) is not removable or erasable, in particular the permanent register of events (E) allowing only the entry of new events and allowing neither the deletion nor the modification of previously entered events (E).

In a 55^{th} aspect according to any one of the previous aspects, the digital environment (B) in which the digital twins (60) of each metal component (10) of the respective plurality of components are created allows the creation of the corresponding digital twin (60) but does not allow the deletion of any digital twin (60) created.

In a 56^{th} aspect according to any one of the previous aspects, each event indicative of a change of a status condition of the corresponding metal component (10) that is entered in the permanent register (R) of events (E) of the corresponding digital twin (60) remains permanently recorded in the corresponding digital environment (B).

In a 57^{th} aspect according to any one of the previous aspects, the digital environment (B) in which the digital twins (60) of each metal component (10) of the respective plurality of components are created is a blockchain, optionally the digital environment (B) in which the digital twins (60) of each metal component (10) of the respective plurality of components are created is a computer network based on a blockchain technology or platform.

In a 58^{th} aspect according to any one of the previous aspects, the storage (F5) of each metal component (10) of the corresponding plurality of components in the corresponding warehouse (103) after the creation step (F4) of the corresponding digital twin (60) is carried out upon the entry (F5.1), in the permanent register (R) relating to the digital twin (60) of each metal component (10), of an event (E) indicative of a status condition of the occurred storage, the entry (F5.1) being carried out simultaneously and massively on the permanent register (R) of events (E) of the digital twins (60) of the metal components (10) of the plurality of components in storage by means of an interaction with the identifier elements (20) of the metal components (10) themselves.

In a 59^{th} aspect according to the previous aspect, the entry (F5.1) of the event (E) related to the status condition of the occurred storage in the permanent event register (R) of events (E) relating to the digital twin (60) corresponding to each metal component (10) prior to storage in the corresponding warehouse (103) is executed simultaneously and massively on the respective plurality of components to be stored in such a way that it updates simultaneously, optionally automatically, the corresponding digital twins (60) in the respective digital environment (B) of the change of the status condition of the respective metal components (10) from the condition of the occurred creation of the respective digital twin (60) to the condition of the occurred storage of the respective metal component (10).

In a 60^{th} aspect according to any one of the previous two aspects, the entry (F5.1) of the event (E) relating to the status condition of the occurred storage in the permanent event register (R) of events (E) relating to the digital twin (60) of each metal component (10) prior to storage in the corresponding warehouse (103) is performed by at least one simultaneous and massive operation of detecting the univocal identifying information (A) of the at least one identifier element (20) of each metal component (10) of the respective plurality of components to be stored.

In a 61^{st} aspect according to the previous aspect, the simultaneous and massive operation of detecting the at least one univocal identifying information (A) of the respective at least one identifier element (20) of each metal component (10) of the respective plurality of components to be stored is carried out by crossing the respective metal components (10) to be stored through a respective detection gate (101') , optionally the crossing of the detection gate (101') by the metal components (10) to be stored being carried out by corssing all metal components (10) to be detected simultaneously or according to a sequential crossing of groups of metal components (10) to be detected.

In a 62^{nd} aspect according to the previous aspect, the simultaneous and massive operation of detecting the at least one univocal identifying information (A) of the respective at least one identifier element (20) of each metal component (10) of the respective plurality of components to be stored is carried out by means of at least one detecting apparatus associated with the detection gate (101'), the detecting apparatus operating in radio frequency, in particular by means of at least one UHF antenna.

In a 63^{rd} aspect according to one or more of any one of the previous three aspects, the simultaneous and massive operation of detecting the respective at least one univocal identifying information (A) of the respective at least one identifier element (20) of each metal component (10) of the respective plurality of components to be stored is carried out according to the following steps:
- stationing the metal components (10) within a respective confined detection region (102') located near or at the entrance or within the warehouse (103) itself, in particular the confined detection region (102') being limited by a controlled chamber, at least one detection apparatus being active within the confined detection region (102'), in particular operating in radio frequency, more particularly by means of at least one UHF antenna;
- simultaneously and massively detecting, by means of the identification information (A) of the respective identifier elements (20), all the metal components (10) present in the confined detection region (102') to enter, optionally automatically, into the corresponding digital twins (60) present in the respective digital environment (B) a new event (E) indicative of the condition of the occurred stationing, in particular with an exact indication of the stationing position (P) in the warehouse(103).

In a 64^{th} aspect according to any one of the previous four aspects, the operation of simultaneously and massively detecting the at least one univocal identifying information (A) of the respective at least one identifier element (20) of each metal component (10) of the respective plurality of components to be stored is carried out by the use of at least one interaction device (104), in particular a portable one, configured to communicate with the at least one identifier element (20) of each metal component (10) and/or with the digital environment (B), optionally by means of at least one programmable electronic unit deputed for managing and/or entering or loading into the permanent event register (R) of events (E) of the respective digital twin of each new event (E) related to a new status condition of the respective metal component (10).

In a 65^{th} aspect according to the previous aspect, the interaction device includes at least one apparatus that operates in radio frequency, particularly by means of at least one UHF antenna.

In a 66^{th} aspect according to the previous aspect, the at least one identifier element (20) fixed on each metal component (10) of the related plurality of components comprises a respective RFID Tag (30) having a corresponding and univocal EPC code defining the univocal identifying information (A) of the respective identifier element (20), the at least one detection apparatus being configured to detect the univocal EPC code of the RFID Tag (30) of the at least one identifier element (20) fixed on each metal component (10) of the respective plurality of components as the univocal identifying information of the respective metal component (10) under detection.

In a 67^{th} aspect according to the previous aspect, in the case where two or more identifier elements (20) are fixed on a respective same metal component (10), they present respective identical univocal EPC codes, the operation of detecting the univocal identification information (A) being carried out by detecting the univocal EPC code of the RFID Tag (30) of one of the identifier elements (20) fixed on the respective and same metal component (10) as being identical to the univocal EPC code of the RFID Tag (30) of every other identifier element (20) fixed on the same metal component (10).

In a 68^{th} aspect according to any one of the previous nine aspects, the operation of entering (F5.1) of the event (E) related to the status condition of the occurred storage in the permanent event register (R) of events (E) relating to the digital twin (60) of each metal component (10) of the respective plurality of components to be stored in the respective storage (103) is followed by at least one interaction step (F6) with the identifier element (20) of each metal component (10) by means of the respective at least one univocal identifying information (A) for inserting a new event (E) in the respective permanent register (R) of events (E) relating to a further change of status of the respective metal component (10) from the condition of having been stored to the condition of having been stationed in the warehouse (103), with an indication of the exact location of the respective stationing position (P).

In a 69^{th} aspect according to the previous aspect, the interaction step (F6), is carried out by at least one simultaneous and massive operation of detecting (F6.1) the univocal identification code (A) of the respective at least one identifier element (20) of each of the metal components (10) in stationing.

In a 70^{th} aspect according to any one of the previous two aspects, the stationing of the metal components (10) within the corresponding warehouse (103) is carried out by placing the respective plurality of components in a respective stationing position (P), optionally the metal components (10) of each plurality of components presenting the same stationing position (P).

In a 71^{st} aspect according to any one of the previous three aspects, the interaction step (F6) is caried out simultaneously and massively, in particular automatically, by at least one detecting apparatus, in particular a plurality of detecting apparatuses distributed in the warehouse (103), each operating in radio frequency, in particular by means of one or more UHF antennas, each detecting apparatus being configured to:
- recognize each metal component (10) in stationing by detecting the univocal identifying information (A) of the corresponding at least one identifier element (20);
- insert, into the permanent event registers (R) of events (E) of the corresponding digital twin (60) in the respective digital environment (B), a new event (E) relating to the condition of the occurred stationing, with an exact indication of the location of the respective metal component (10) in the warehouse (103).

In a 72^{nd} aspect according to any one of the previous four aspects, the entry in the permanent register (R) of events (E) of each digital twin (60) of the stationary position (P) the respective metal component (10) of the respective plurality of components stationed in the respective warehouse (103) is carried out simultaneously and massively by means of the use of at least one interaction device (104), in particular portable, provided with at least one detecting apparatus operating in radio frequency, in particular by means of at least one UHF antenna, the interaction device (104) being configured to communicate with the at least one identifier element (20) of each metal component (10) and/or with the digital environment (B), optionally by means of at least one programmable electronic unit deputed to manage and/or update the digital twins, the detecting apparatus or each of the detecting apparatuses being configured to:
- recognize each metal component (10) of a respective plurality of stationed components through the univocal identifying information (A) of the respective at least one identifier element (20);
- insert into the permanent register (R) of events (E) of the respective digital twin (60) of each stationed metal component (10) a new event (E) related to the occurred stationing, with an exact indication of the location of the respective metal component (10) in the warehouse (103).

In a 73^{rd} aspect according to any one of the previous two aspects, the at least one identifier element (20) fixed on each metal component (10) of the respective plurality of components comprises a respective RFID Tag (30) having a corresponding and univocal EPC code defining the univocal identifying information (A), the at least one detection apparatus being configured to detect the univocal EPC code of the RFID Tag (30) of the at least one identifier element (20) fixed on each metal component (10) of the respective plurality of components as the univocal identifying information (A) of the respective metal component (10) under detection.

In a 74^{th} aspect according to the previous aspect, in the case wherein two or more identifier elements (20) are fixed on a respective same metal component (10), they present respective identical univocal EPC codes, the operation of detecting the univocal identification information (A) being carried out by detecting the univocal EPC code of the RFID Tag (30) of one of the identifier elements (20) fixed on the respective and same metal component (10) as being identical to the univocal EPC code of the RFID Tag (30) of every other identifier element (20) fixed on the same metal component (10).

In a 75^{th} aspect according to any one of the previous eight aspects, one or more metal components (10) stationed within the warehouse (103) are subjected to at least a first step of loading (F7) into the permanent register (R) of events (E) of the respective digital twins (60) of a new event (E) indicative of a change of a status condition from the condition of the occurred stationing in the warehouse (103) to a condition of the occurred assignment of these metal components (10) to a respective fulfillment order (O) of a supply and/or delivery order to a third party or a stock transfer to a physical location other than the respective warehouse (103), the first step of loading (F7) of the change of status condition of a metal component (10) stationed in the respective warehouse (103) determining the recording, in particular automatically, in the permanent register (R) of events (E) of the corresponding digital twin (60) of the new condition of occurrence of assignment to a respective fulfillment order (O).

In a 76^{th} aspect according to the previous aspect, the first step of loading (F7) into the permanent register (R) of events (E) of the respective digital twins (60) of a new event (E) indicative to the assignment of one or more metal components (10) stationed in the warehouse (103) to a respective fulfillment order (O) is followed by a second step of loading (F8) into the permanent register (R) of events (E) of the respective digital twins (60) of a new event (E) indicative of the change of the status condition of each metal component (10) from the condition of the occurred assignment to a condition of execution of the respective fulfillment order (O) in which each metal component (10) assigned to that fulfillment order (O) is transferred from the respective warehouse (10) releasing the respective stationary position (P) occupied therein, the second loading step (F8) determines the recording, particularly automatically, in the permanent register (R) of events (E) relating to the digital twin (60) of each metal component (10) of the execution of the fulfillment order (O).

In a 77^{th} aspect according to any one of the previous two aspects, the first loading step (F8) is carried out simultaneously and massively, in particular automatically, on all metal components (10) stationed in the warehouse (103) and related to the same fulfillment order (O), by means of at least one detecting apparatus, in particular a plurality of detecting apparatuses distributed in the warehouse (103) and operating in radio frequency, in particular by means of one or more UHF antennas, the detecting apparatuses being configured for:
- recognizing each metal component (10) stationed in the warehouse (103) through the univocal identifying information (A) of the respective at least one identifier element (20);
- identifying, among the metal components (10) stationed in the warehouse (103), the metal components (10) to be assigned to a respective, in particular the same, fulfillment order (O), the identification being carried out by the at least one univocal identifying information (A) of the identifier elements (20);
- assigning the metal components (10) identified to the respective fulfillment order (O), this assignment being carried out through the respective identifier elements (20);
- recording in the permanent register (R) of events (E) relating to the digital twin (60) of each metal component (10) that the respective metal component (10) has been assigned to the respective fulfillment order (O).

In a 78^{th} aspect according to any one of the previous five aspects, the first loading step (F7) is carried out simultaneously and massively, in particular automatically, by the use of at least one interaction device (104), in particular portable, provided with at least one detecting apparatus operating in radio frequency, in particular by means of at least one UHF antenna, the interaction device (104) being configured to communicate with the at least one identifier element (20) of each metal component (10) and/or with the digital environment (B), optionally by means of at least one programmable electronic unit deputed to manage and/or update the digital twins (60), the detecting apparatus or each of the detecting apparatuses being configured to:
- recognize each metal component (10) stationed in the warehouse (103) through the univocal identifying information (A) of the respective at least one identifier element (20);
- identify, among the metal components (10) stationed in the warehouse (103), the metal components (10) to be assigned to a respective, in particular the same, fulfillment order (O), the identification being carried out by the at least one univocal identifying information (A) of the identifier elements (20);
- assign the metal components (10) identified to the respective fulfillment order (O), this assignment being carried out through the respective identifier elements (20);
- record in the permanent register (R) of events (E) relating to the digital twin (60) of each metal component (10) that the respective metal component (10) has been assigned to the respective fulfillment order (O).

In a 79^{th} aspect according to any one of the previous three aspects, the second loading step (F8) of each metal component (10) previously assigned to a respective fulfillment order (O) from a the occurred assignment condition to an execution condition of the fulfillment order (O) is executed simultaneously and massively, in particular automatically, on all metal components (10) assigned to that fulfillment order (O), by means of at least one detecting apparatus, in particular a plurality of detecting apparatus distributed within the warehouse (103), operating in radio frequency, in particular by means of one or more UHF antennas, the detecting apparatuses being configured to:
- recognize each metal component (10) assigned to a respective, in particular same, fulfillment order (O), through the univocal identifying information (A) of the corresponding at least one identifier element (20);
- insert into the permanent register (R) of events (E) of the respective digital twin (60) of each metal component (10), whose fulfillment order (O) is being executed, a new event (E) related to the execution of the fulfillment order (O) and the transfer of the respective metal component (10) from the warehouse (103).

In an 80^{th} aspect according to any one of the previous four aspects, the second loading step (F8) into the permanent register (R) of events (E) relating to the digital twin (60) of each metal component (10) previously assigned to a respective evasion order (O) from a the occurred assignment condition to an execution condition of the evasion order (O), is executed simultaneously and massively, in particular automatically, on all metal components (10) assigned to that fulfillment order (O), by the use of at least one interaction device (104), in particular portable, provided with at least one detecting apparatus operating in radio frequency, in particular by means of at least one UHF antenna, the interaction device (104) being configured to communicate with the at least one identifier element (20) of each metal component (10) and/or with the digital environment (B), optionally by means of at least one programmable electronic unit deputed to manage and/or update the digital twins (60), the detecting apparatus or each of the detecting apparatuses being configured to:
- recognize each metal component (10) assigned to a respective, in particular the same, fulfillment order (O), by the univocal identifying information (A) of the corresponding at least one identifier element (20);
- insert into the permanent register (R) of events (E) of the respective digital twin (60) of each metal component (10), whose fulfillment order (O) is being executed, a new event (E) related to the execution of the fulfillment order (O) and the transfer of the respective metal component (10) from the warehouse (103).

In an 81^{st} aspect according to any one of the previous five aspects, the second loading step (F8) into the permanent register (R) of events (E) relating to the digital twin (60) of each metal component (10) previously assigned to a respective fulfillment order (O) from a the occurred assignment condition to an fulfillment order execution condition (O) is executed simultaneously and massively, in particular automatically, on all metal components (10) assigned to such an fulfillment order (O), by the simultaneous or sequential crossing of the metal components (10), whose evasion order (O) is being executed, through a respective detection gate (101"), provided with at least one detecting apparatus operating in radio frequency, in particular by means of at least one UHF antenna, the detecting apparatus being configured for:
- recognizing each metal component (10) assigned to a respective, in particular the same, fulfillment order (O), through the univocal identifying information (A) of the respective at least one identifier element (20);
- inserting into the permanent register (R) of events (E) of the corresponding digital twin (60) of each metal component (10), whose fulfillment order (O) is being executed, a new event (E) related to the execution of the fulfillment order (O) and the transfer of the respective metal component (10) from the warehouse (103).

In an aspect 81^{st} bis according to any one of the previous aspects, the plurality of metal components (10) includes e number of metal components (10) between 20 and 500.

In an 82^{nd} independent aspect that may be combined with any one of the previous aspects or any of the following aspects, it is provided a scaffolding (1), optionally modular, comprising a plurality of metal components (10) mutually engageable and combinable to define the structure of the corresponding scaffolding (1), the metal components (10) of the scaffolding (1) being comprised of one or more of the following types of components: uprights (11); upright frames (15); ledgers/bracings (12) with respective clamp portions (12c); ledgers/bracings (18) with engagement joints (18a); planks (13); toeboards (14); guardrails (16); and, finials (17),
each of the metal components (10) of the scaffolding (1) being provided with at least one RFID Tag (30) defining a respective identifier element (20), the at least one RFID Tag (30) of each metal component (10) defining a univocal identifying information (A) of the respective metal component (10), the at least one RFID Tag (30) being fixed on each metal component (10) in a non-removable manner by gluing or welding so that any attempt to remove it results in damage to the RFID Tag (30).

In an 83^{rd} aspect according to the previous aspect, it is provided that:
- the at least one RFID Tag (30) fixed to each upright (11) is inserted within said upright (11) through a respective opening arranged in a respective end portion of said upright (11) or being externally fixed to the same, in particular by means of at least one collar; and/or,
- the at least one RFID Tag (30) fixed to each upright frame (15) is inserted within a post (15a) of the upright frame (15) through a respective opening arranged in a respective end portion of the upright frame (15) or is fixed externally to the same, in particular by means of at least one collar; and/or;
- the at least one RFID Tag (30) fixed to each ledger/bracing (12) with respective clamp portions (12c) is positioned within a cavity (12e) of a corresponding clamp portion (12c) of an end (12b) of the respective ledger/bracing (12), optionally the ledger/bracing (12) with respective clamped portions (12c) being provided with two RFID Tags (30) each defining the same univocal identifying information (A) of the respective metal component (10), each RFID Tag (30) being fixed within the same cavity (12e) of a corresponding clamp portion (12c) of the respective ledger and/or bracing (12); and/or,
- the at least one RFID Tag (30) fixed on each ledger/bracing (18) with respective engagement joints (18a) is externally fixed to the same, in particular by means of at least one collar or on a respective engagement joint (18a), in particular at one end (18d, 18e) of the respective engagement joint (18a) to enable the engagement joint (18a) to engage a corresponding engagement seat defined on another metal component (10), in particular an upright frame (15); and/or,
- the at least one RFID Tag (30) fixed to each plank (13) is placed on a respective short side (13b), below a corresponding engagement flange (13c), of the respective plank (13); and/or
- the at least one RFID Tag (30) fixed to each toeboard (14) is positioned at a respective folded laminar end (14c) of the toeboard (14); and/or,
- the at least one RFID Tag (30) fixed to each guardrail (16) is externally fixed to the guardrail, particularly by means of at least one collar; and/or,
- the at least one RFID Tag (30) fixed to each finial (17) is externally fixed to the same, particularly by means of at least one collar.

In a further independent aspect 84^{th} that may be combined with any one of the previous aspects, it is provided a kit of mutually engageable and combinable metal components (10) to define a structure of a corresponding scaffolding (1), wherein each metal component (10) is provided with at least one RFID Tag (30) defining a respective identifier element (20), the at least one RFID Tag (30) of each metal component (10) defining a univocal identifying information (A) of the respective metal component (10), the at least one RFID Tag (30) being fixed to each metal component (10) in a non-removable manner by gluing or welding whereby any attempt to remove it results in damage to the RFID Tag (30), the kit comprising:
- at least one upright (11), optionally a plurality of uprights (11), the at least one RFID Tag (30) fixed to the upright (11) being inserted within said upright (11) through a respective opening arranged in a respective end portion of said upright (11) or being fixed to the outer surface thereof, in particular by means of at least one collar; and/or,
- at least one upright frame (15), optionally a plurality of upright frames (15), the at least one RFID Tag (30) fixed to each upright frame (15) being inserted within a post (15a) of the upright frame (15) through a respective opening arranged in a respective end portion of the post (15a) or being externally fixed on the same, in particular by means of at least one collar; and/or,
- at least one ledger/bracing (12) with respective clamp portions (12c), optionally a plurality of ledgers/bracings (12) with respective clamp portions (12c), the at least one RFID tag (30) fixed to the ledger/bracing (12) with respective clamp portions (12c) being positioned within a cavity (12e) of a respective clamp portion (12c) of an end (12b) of the respective ledger/bracing (12); and/or,
- at least one ledger/bracing (18) with respective engagement joints (18a), optionally a plurality of ledgers/bracings (18) with engagement joints (18a), the at least one RFID Tag (30) fixed to each ledger/bracing (18) with respective engagement joints (18a) being externally fixed on the same, in particular by means of at least one collar, or on a respective engagement joint (18a), in particular at an end of the respective engagement joint (18a) to enable the engagement joint (18a) to engage a corresponding receiving location defined on another metal component (10), in particular an upright frame (15); and/or,
- at least one plank (13), optionally a plurality of planks (13), the at least one RFID tag (30) fixed to the plank (13) being positioned on a respective one short side (13b) below a corresponding engagement flange (13c) of the respective plank (13); and/or,
- at least one toeboard (14), optionally a plurality of toeboards (14), the at least one RFID Tag fixed to each toeboard (14) being positioned at a respective folded laminar end (14c) of the toeboard (14); and/or,
- at least one guardrail (16), in particular a plurality of guardrails (16), the at least one RFID Tag (30) fixed to each guardrail (16) being externally fixed on the same, in particular by means of at least one collar; and/or,
- at least one finial (17), in particular a plurality of finials (17), the at least one RFID Tag (30) fixed to each finial (17) being externally fixed to the same, in particular by means of at least one collar.

In an 85^{th} aspect according to any one of the previous two aspects, each RFID Tag (30) is fixed on a respective metal component (10) by means of a corresponding protective capsule (40), optionally by the use of an adhesive fixing substance or by welding.

In an 86^{th} aspect in accordance with the previous aspect, the protective capsule (40) has a basically plug-like shape and is configured to close the cavity of the upright (11) or of a post (15a) of an upright frame (15) through at least one respective end opening.

In an 87^{th} aspect according to the previous aspect, the protective capsule (40) presents a body (40c) provided with:
- a first portion (40d) of protection and closure, optionally convex, to protect the RFID Tag (30) against shock and impact, particularly the first portion (40d) presenting substantially the same diameter, or a proximal diameter, to an outer diameter of the upright (11) in which it is applied; and,
- a second portion (40e), integral with the first portion (40d) arranged to be inserted into the upright (11) or post (15a) cavity of an upright frame (15), in particular, the second portion (40d) being provided with at least one annular bulge (40f) slightly larger than the inner diameter of the cavity of the upright (11) or the post (15a) of an upright frame (15) such that the protective capsule (40) remains engaged at the opening of the corresponding upright/post (11, 15a) by interference.

In an 88th aspect according to the previous aspect, a housing seat (40a) is cut out for the fixing and/or housing of the respective RFID Tag (30) between the first portion (40d) and the second portion (40e) of the protective capsule (40).

In an 89^{th} aspect according to any one of the previous two aspects, an engagement surface (40b), configured to support the adhesive fixing substance, is defined by a flat surface of the first portion (40d) that faces the second portion (40e) of the respective protective capsule (40).

In a 90^{th} aspect according to any one of the previous five aspects, the protective capsule (40) presenting a substantially collar-like shape so as to externally engage the structure of the respective upright (11) or the post (15a) of an upright frame (15) or any other cylindrical or tubular structure of any other metal component (10) for forming a scaffolding (1), optionally the protective collar capsule (40) presenting a substantially cylindrical tubular structure with a structural break (40i) that allows its spread when engaged on a respective metal component (10). In a 91^{st} aspect in accordance with the previous aspect, an inner surface of the protective (40) capsule at collar defines an engagement surface (40b) of the same configured to support the adhesive fixing substance, the engagement surface (40b) being a curved surface.

In a 92^{nd} aspect according to the previous aspect, at least one housing seat (40a) for the fixing and/or housing of a respective RFID Tag (30) is cut into an area of the engagement surface (40b) of the protective capsule (40).

In a 93^{rd} aspect according to any one of the previous five aspects, the protective capsule (40) fixable on each legder/bracing (12) with respective clamp portions (12c) has a body (40c) substantially flat, optionally with a substantially square or rectangular outline, arranged to be positioned in the cavity (12e) of a clamp portion (12c) of the respective ledger/bracing (12) with respective clamp portions (12c), in particular the body (40c) of such a protective capsule (40) presenting an inner side (40k) defining an engagement surface (40b) arranged to support the adhesive fixing substance.

In a 94^{th} aspect according to the previous aspect, the inner side (40k) of the protective capsule (40) also has at least one housing seat (40a) for fixing or housing a corresponding RFID tag (30).

In a 95^{th} aspect according to any one of the previous six aspects, the protective capsule (40) fixable on each ledger/bracing (18) with respective engagement joints (18a) presents:
- a body (40c) substantially wedge-shaped provided with a housing seat (40a) for the engagement of an RFID Tag (30) interposed between two fixing protuberances (40k) at one end (18d) of the respective engagement joint (18a) that is constrained to the ledger/bracing(18); or,
- a substantially cylindrical body (40c) within which an RFID Tag (30) is housed, the cylindrical body (40c) being screwable onto a free end (18e) of the respective engagement joint (18a).

In a 96^{th} aspect according to any one of the previous seven aspects, the protective capsule (40) fixable on each toeboard (14) presents a body (40c) of semi-shell and/or semi-ovoid shape, the semi-shell-shaped body (40c) of the protective capsule (40) having a rounded outer side (40m) and a substantially flat inner side (40n) on which is defined an engagement surface (40b) arranged to support the adhesive fixing substance and at least one housing seat (40a) for fixing and/or housing a respective RFID Tag (30), optionally the engagement surface (40b) of the protective capsule (40) with a body (40c) with a semi-shell and/or semi-ovoid body being engageable on any flat surface of any metal component (10) .

In a 97^{th} aspect according to any one of the previous eight aspects, the protective capsule (40) fixable to each plank (13) has a body (40c) having a substantially flat inner side on which is defined an engagement surface (40b) arranged to support the adhesive fixing substance and at least one housing seat (40a) for fixing and/or housing a respective RFID Tag (30), the body (40c) of the protective capsule (40) having at least one curved portion (40p) configured to engage a respective edge of the body side (13b) of the respective plank (13).

### Brief description and drawings

A detailed description of one or more preferred embodiments of the invention is now given by way of example and not limitation, wherein:
- Figure 1 is a block diagram of a method of manufacturing and storing metal scaffolding components according to the present invention;
- Figure 2 is a schematic representation of the creation of a digital twin in a corresponding digital environment of each of the manufactured metal components, according to the method of production and storage according to the present invention;
- Figure 3 is a schematic representation of a digital twin, provided with a respective permanent register of events, of a respective metal component manufactured according to the method of production and storage according to the present invention;
- Figure 4 is a schematic representation of the flow of recording the change of status conditions of each metal component from the arrangement of the same with corresponding creation of the respective digital twin in the respective digital environment, as schematized in Figure 2, to the final transfer of components from a respective warehouse to execute a respective fulfillment order;
- Figure 5 is a schematic representation of an RFID tag identifier element fixable to a respective metal component for the purpose of carrying out the production and storage method shown in Figure 1, according to the present invention;
- Figure 6 is a schematic perspective view representation of a multidirectional scaffolding according to the present invention;
- Figure 7 is a schematic perspective view representation of a frame scaffolding according to the present invention;
- figure 8 is an interrupted schematic perspective view of a metal scaffolding component, in this case a metal upright, which can be manufactured by the production and storage method schematized in figure 1, provided with an RFID tag identifier element fixed to it by a first engagement mode;
- Figure 9 is an interrupted schematic perspective view of an additional metal scaffolding component, in this case an additional metal upright, which can be manufactured by the production and storage method schematized in Figure 1, provided with an RFID tag identifier element on it fixed by a second engagement mode different from the engagement mode shown in Figure 8;
- Figure 10 is a schematic perspective view of an additional metal scaffolding component, in this case an additional metal upright, which can be manufactured by the production and storage method schematized in Figure 1, provided with an RFID tag identifier element on it fixed by a second engagement mode different from the engagement mode shown in Figures 8 and 9;
- Figure 11 is a schematic perspective view of an additional metal scaffolding component, in this case a plank, which can be manufactured by the production and storage method schematized in Figure 1, provided with an RFID tag identifier element, fixed to it;
- Figure 12 is a schematic perspective view of an additional metal scaffolding component, in this case a toeboard, which can be fabricated by the production and storage method schematized in Figure 1, provided with an RFID tag identifier element;
- Figure 13 is a schematic perspective view of an additional metal scaffolding component, in this case a ledger or bracing with clamp end portions, which can be manufactured by the production and storage method schematized in Figure 1, provided with respective RFID tag identifier elements;
- figure 14 is a schematic perspective view of an additional metal scaffolding component, in this case a guardrail, which can be manufactured by the production and storage method schematized in figure 1, provided with respective RFID tag identifiers fixed to it;
- figure 15 is an interrupted schematic perspective view of an additional metal scaffolding component, in this case a ledger or bracing with respective engagement joints, which can be manufactured by the production and storage method schematized in figure 1, provided with a respective RFID tag identifier element fixed to it, different from the one shown in figure 14;
- figure 16 is an interrupted schematic perspective view of an additional metal scaffolding component, in this case a ledger or bracing with respective engagement joints, which can be manufactured by the production and storage method schematized in figure 1, provided with a respective RFID tag identifier element;
- Figure 17 is an interrupted schematic perspective view of an additional metal scaffolding component, in this case an upright frame, which can be manufactured by the production and storage method schematized in Figure 1, provided with at least one corresponding RFID tag identifier element fixed to it;
- figure 18 is an interrupted schematic perspective view of an additional metal scaffolding component, in this case a finial, which can be manufactured by the production and storage method schematized in figure 1, provided with a corresponding RFID tag identifier element fixed to it;
- Figures 19 to 21 are schematic perspective views of some embodiments of RFID protective capsules that can be fixed to metal components of cylindrical or tubular shape, such as the uprights shown in Figures 8 to 10 or the guardrail shown in Figure 14 or the upright frame shown in Figure 17 or the finial shown in Figure 18;
- Figures 22 and 23 are perspective views of another embodiment of a protective capsule for an RFID tag, fixable to a corresponding clamp portion of a ledger or bracing, as shown in Figure 13;
- Figures 24 and 25 are perspective views of another embodiment of a protective capsule for RFID tag which can be fixed to a flat surface of any metal component, such as a bent end of a toeboard, as the one shown in Figure 12;
- Figures 26 and 27 are perspective views of another embodiment of a protective capsule for RFID tag, which can be fixed to a flat surface of any metal component near a respective edge, such as a short side of a plank, as shown in Figure 11;
- Figure 28 is a perspective view of an additional embodiment of a protective capsule for RFID tag, which can be fixed to one end of an engagement joint constrained to a respective ledger or bracing, as shown in Figure 15;
- Figure 29 is a perspective view of an additional embodiment of a protective capsule for RFID tag, which can be fixed to a free end of an engagement joint constrained to a respective ledger or bracing, as shown in Figure 16.

### Detailed description

The production and storage method M1 according to the present invention enables the manufacture of metal components 10 for scaffolding 1, such as frame and facing scaffolding made from prefabricated components or scaffolding with prefabricated uprights and crossbars, also known as multidirectional scaffolding, such as those standardized in UNI EN12810 and EN12811.

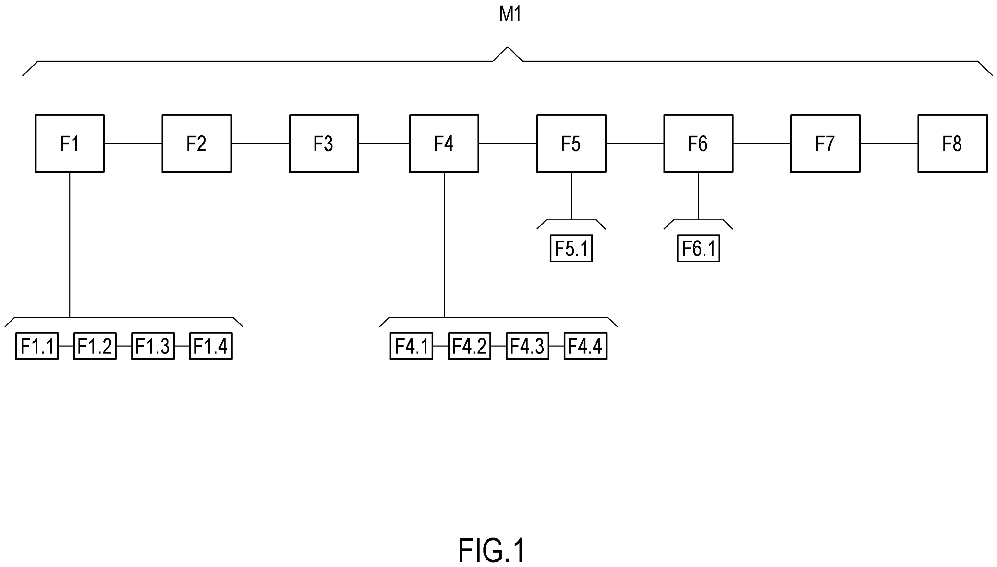

The manufacturing and storage method M1, represented schematically by means of the block diagram in Figure 1, includes a preliminary step of manufacture F1 of at least a plurality of metal components 10 for scaffolding 1 that is carried out according to techniques known in the industry of manufacturing similar metal products.

The term plurality of metal components refers to a group of metal components 10 indicatively comprised between 20 and 500 components.

The fabrication F1 of metal components 10 is performed by carrying out at least two basic process steps, namely a structural formation step F1.1 of each metal component 10 and a galvanizing step F1.2 of each metal component 10 structurally manufactured by the structural formation step F1.1.

The galvanizing step F1.2 of each metal component 10 can be carried out hot, by, for example, immersing each metal component 10 into a tank containing molten zinc, particularly at a temperature between 350° and 550°, preferably at about 450° C. Alternatively, the galvanizing step F1.2 of each metal component 10 in the manufacture and production can be carried out cold, by, for example, an electrolytic galvanizing process, in which each metal component 10 is immersed in a solution provided with zinc salts.

In some situations, depending on the type of metal components 10 being manufactured and produced, it is possible that, after the galvanizing step F1.2, the galvanized metal components 10 may have to undergo one or more bending or press-bending steps F1.3, which are normally carried out by means of suitable machines and/or calenders, which are aimed at giving the metal components 10 a specific shape.

In order to remove the oil, grease, and/or any other lubricants that are inevitably deposited on the metal components 10 when they undergo the bending and/or press-bending step F1.3, the metal components 10 shaped by this step are subjected to at least one surface cleaning step F1.4 which is usually carried out by means of an appropriate chemical treatment that may include degreasing and/or pickling and/or rinsing and/or flushing.

In order to optimize the production and storage method M1 of the above-mentioned metal 10 components, it is preferable, but not essential, that the metal 10 components to be manufactured belong to the same component type, i.e. that they are all structurally substantially identical to one other, for at least two or more successive production runs.

In particular, the manufacture of each plurality of metal components 10 is carried out in such a way as to ensure the continuity of production of the same type of component over time. Once the need for continuous manufacture and production of a given type of metal component 10 has been exhausted, the production and storage method M1 may also provide for differentiated production, wherein different types of metal components 10 are manufactured and produced in the same production run or in successive production runs.

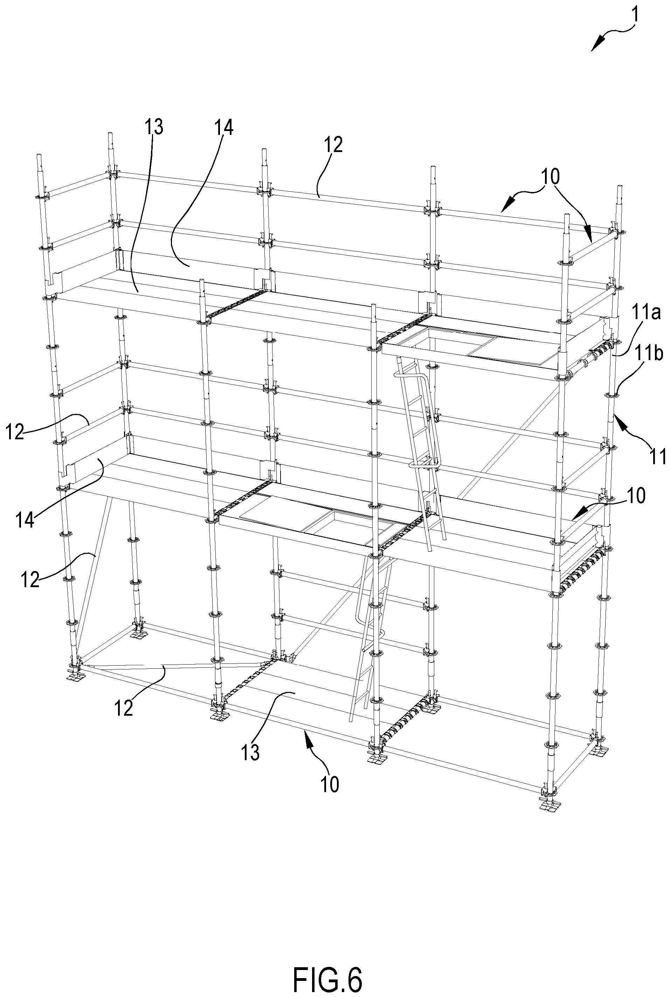

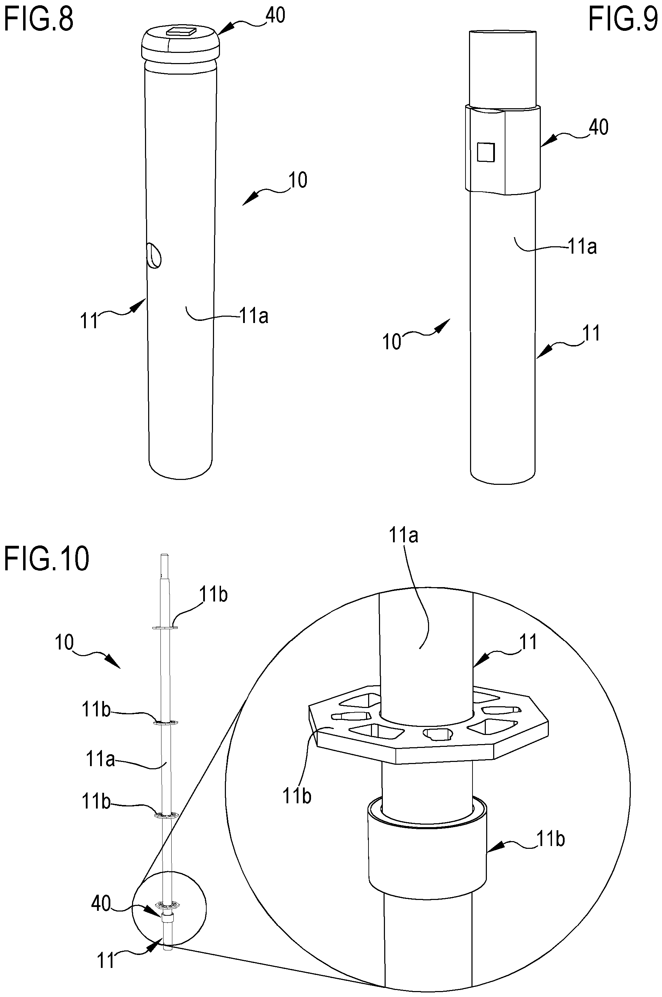

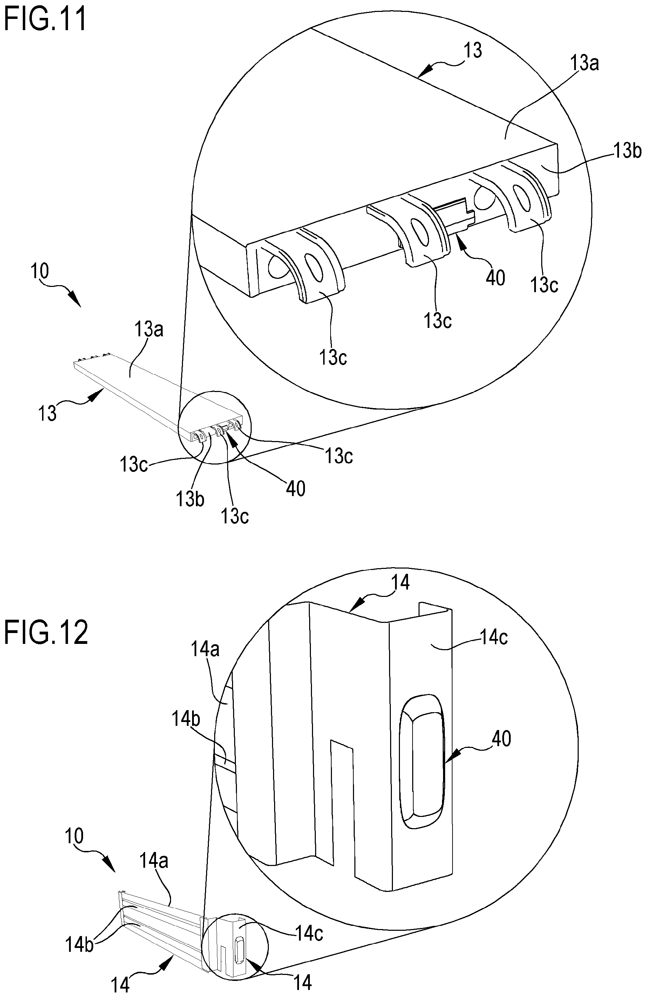

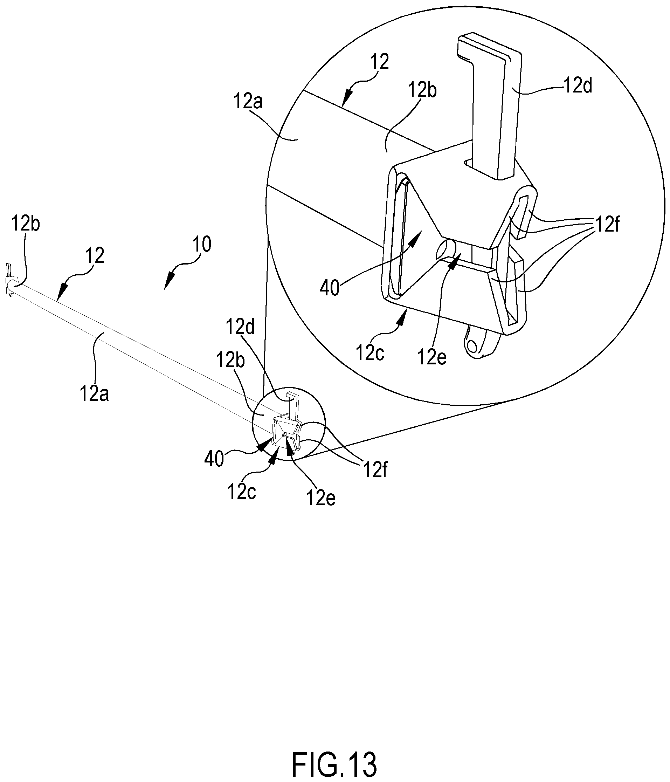

By means of the above mentioned production and storage method M1, it is possible to manufacture and produce many different types of metal components 10 intended for forming scaffolding 1. In fact, this method makes it possible to produced metal components 10 generally used to form mutidirectional scaffolding 1 (Figure 6), such as, for example, uprights 11 (Figures 8 to 10); ledgers/bracings 12 with respective clamp portions (12c) (Figure 13); planks 13 (Figure 11); and, toeboards 14 (Figure 12).

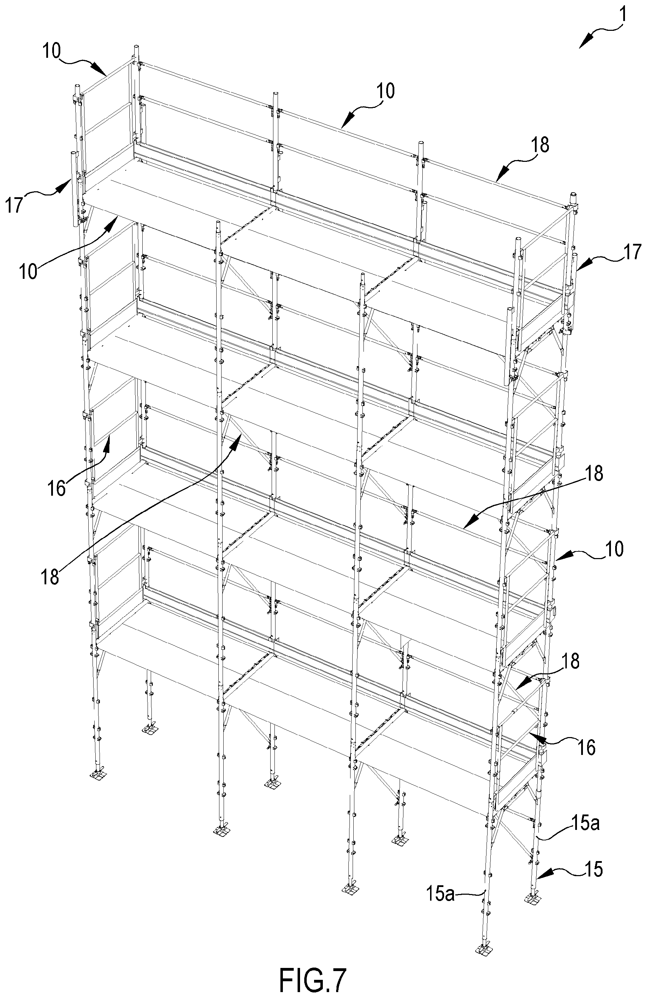

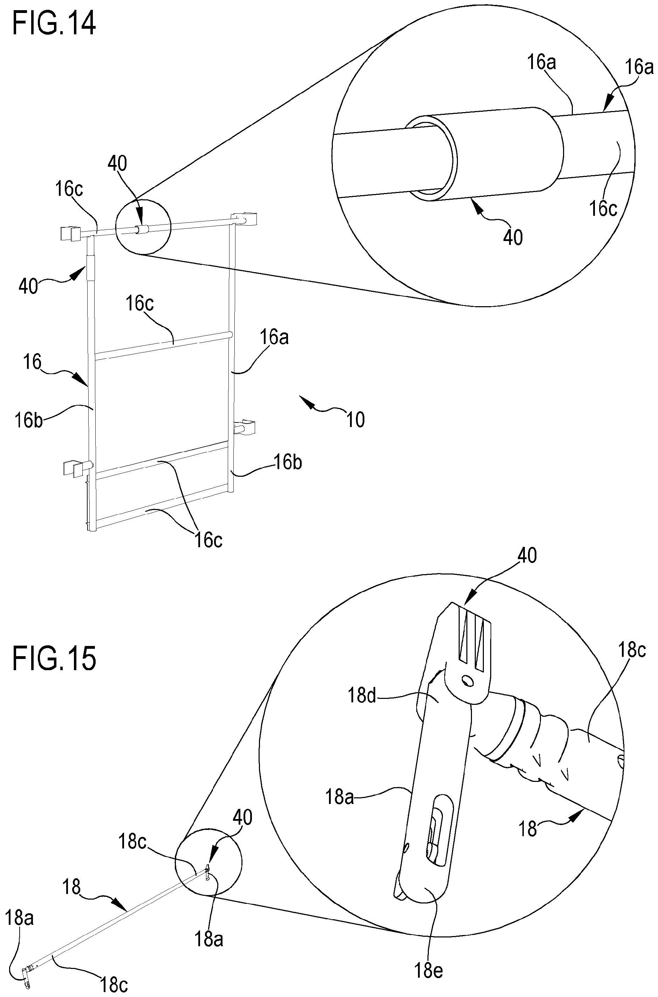

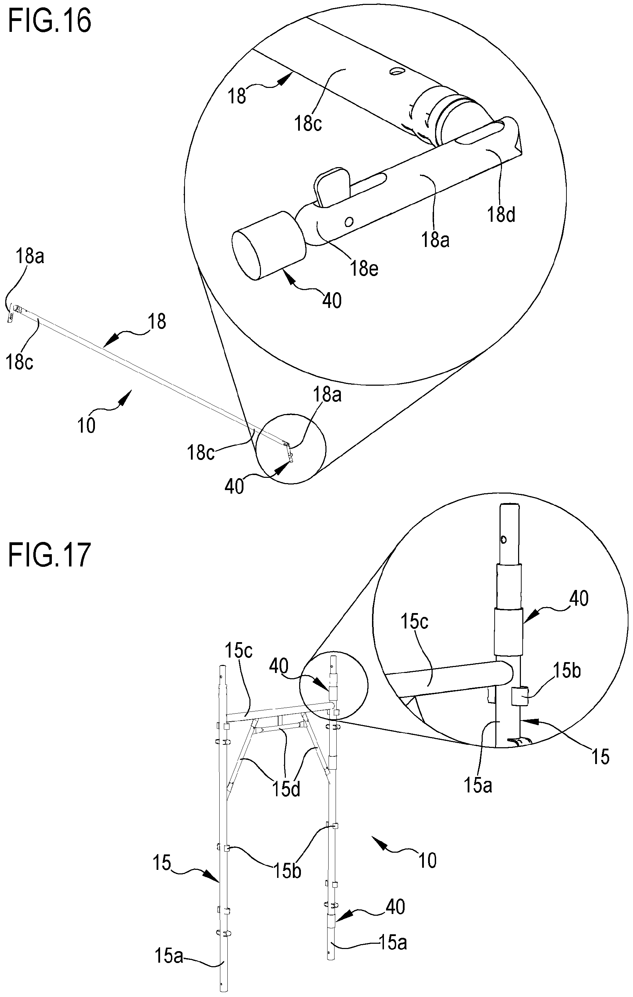

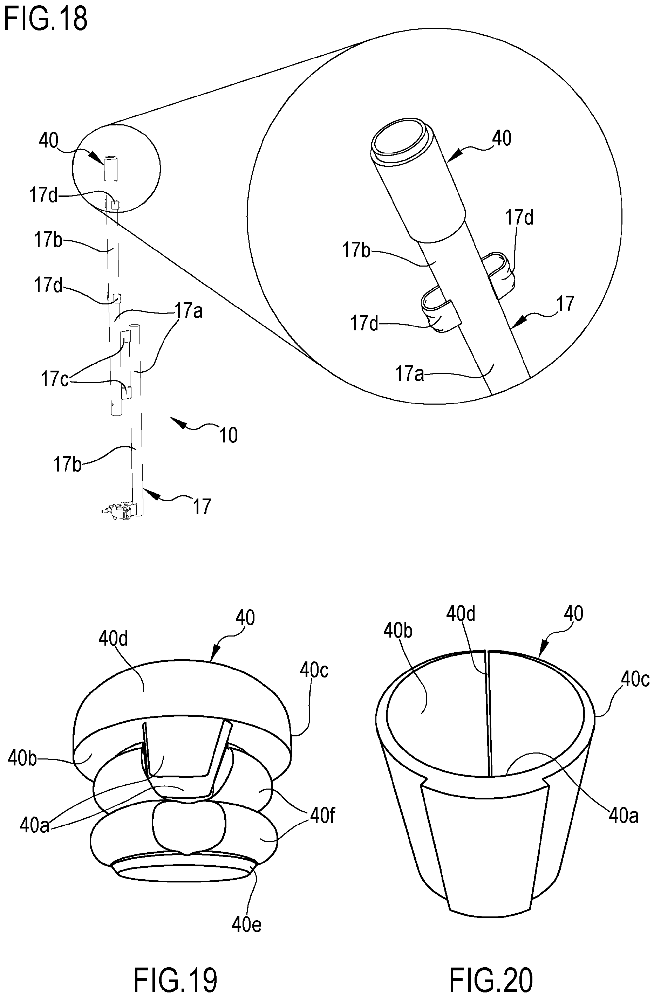

By means of the method according to the present invention, it is also possible to produce metal components 10 which can be used to form scaffolding 1 frames (Figure 7), such as, for example, upright frames 15 (Figure 17), ledgers/bracings 18 with engagement joints 18a (Figures 15 and 16), planks 13 (Figure 11), guardrails 16 (Figure 14), toeboards and finials 17 (Figure 18). Additional types other than those mentioned above can still be manufactured and produced by the production and storage method M1 according to the invention, such as additional embodiments of crossing bars, support feet, or other components.

Going into the details of each of the metal components 10 that can be manufactured, the uprights 11 have respective cylindrical and hollow 11a structures that are vertically arranged by axially inserting one upright 11 into the other and are provided with one or more rosettes 11b (figure 6) by means of which additional metal components 10 of scaffolding 1, such as, for example, ledgers and bracings 12 (figure 6) can engage to define the overall structure. Ledgers and bracings 12 (Figure 6) also have cylindrical structures 12a. In the case of multidirectional scaffolding 1, the ledgers and bracings 12 can be terminated at their own ends 12b with respective clamp portions 12c intended to ensure coupling with the rosettes 11b of the uprights 11 by means of respective clamping wedges 12d passing through both the respective clamp portions 12c of the respective ledgers and bracings 12 and the respective rosettes 11b of the uprights 11. The clamp portions 12c define respective cavities 12e that are partially closed by structural wings 12f of the same.

In the case of frame scaffolding 1, the ledgers and bracings 18 (Figures 15 and 16) have opposite ends 18c which terminate in respective engagement joints 18a, i.e. protuberances which allow the ledger or bracing 18 to be engaged on another metal component 10 of the scaffolding 1, usually an upright frame 15 provided with appropriate receiving seats 15b.

The upright frames 15 (Figure 17) each comprise a pair of parallel posts 15a suitably interconnected by at least one transverse tubular portion 15c and corresponding reinforcing tubular elements 15d developing obliquely between the respective posts 15a and the corresponding transverse tubular portion 15c. The above mentioned receiving seats 15b are located and defined according to positions distributed along the posts 15a of the respective upright frames 15.

The planks 13 (Figure 11), which are intended for use on both multidirectional scaffolding 1 (Figure 6) and frame scaffolding 1 (Figure 7) have in most cases a substantially parallelepipedal structure 13a which has, on the short sides 13b, a series of curved or hooked engagement flanges 13c.

The toeboards 14 have a substantially laminar structure 14a which, depending on the type of scaffolding 1, may have appropriate structural reinforcing bends 14b. In addition, the toeboards 14 have corresponding laminar folded ends 14c. The toeboard 14 shown in Figure 12 is generally intended to form multidirectional scaffolding 1. However, the version of the toeboard dedicated to frame scaffolding 1 does not differ much from that shown in figure 12.

The guardrails 16 (Figure 14), normally used on frame scaffolding (Figure 7) have a substantially rectangular grid structure 16a in which two parallel 16b bearing portions connected by a plurality of perpendicular crossing bars 16c can be identified. Each guardrail 16 is secured to a respective upright frame 15 between the posts 15a thereof.

The finials 17 (Figure 18), which are also used to form the structure of frame scaffolding 1, have a structure 17a comprising two tubular elements 17b interconnected by two respective connection plates 17c. At least one of the two tubular elements 17b is provided with a plurality of receiving seats 17d to receive engagement protrusions of other metal components 10, such as engagement joints 18a of the ledgers or bracings 18.

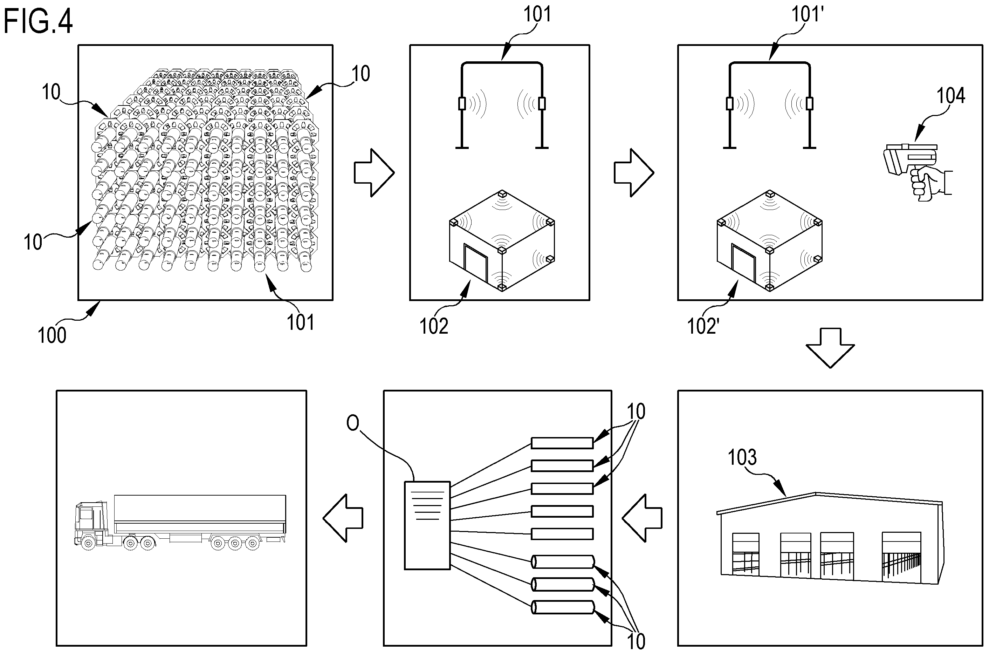

Subsequent to the manufacture F1 of one or more pluralities of metal components 10 of the same or different types, the production and storage method M1 provides for the arrangement F2 of at least one plurality of metal components 10 of the same type on one or more suitable transport carriers, such as, for example, pallets or similar transport pallets or brought together by means of suitable straps or similar wrapping bands or belts whereby each plurality of components can be easily handled by means of a conventional loading forklift truck. The arrangement step F2 of the pluralities of metal components 10 is generally carried out at a suitable preparation station 100 (Figure 4) suitably set up within a respective production and/or storage area.

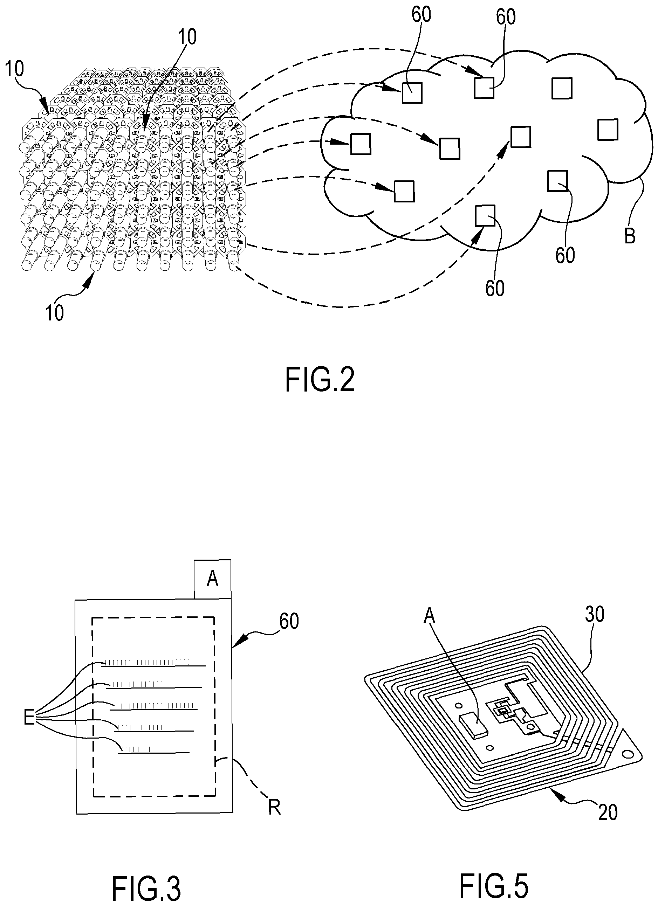

Following the arrangement F2 of each plurality of metal components 10, of the same type, the method comprises a step of fixing F3 at least one identifier element 20 (Figure 5) to each metal component 10 of the respective plurality of components. Each identifier element 20 is configured to be associated with one or more information data relating to the respective metal component 10.

Depending on the type of the metal component 10 arranged in the preparation station 100, the fixing step F3 may also involve the fixing of two or more identifier elements 20 on each metal component 10 of the previously arranged plurality of components. Normally, for metal components 10 such as uprights 11, planks 13, and toeboards 14, the fixing of an univocal identifier element 20 is sufficient, while for metal components 10 such as ledgers and bracings 12, 18, the fixing of two identifier elements 20 is preferable. Of course, the number of identifier elements 20 may also vary depending on the contingent requirements and structural shapes of the respective metal components 10. Advantageously, each identifier element 20 has an univocal unmodifiable identifying information A which identifies it from the other identifier elements 20

In the case where two or more identifier elements 20 are fixed to a respective and same metal component 10, they all have the same univocal identifying information A.

According to an advantageous aspect of the invention, each identifier element 20 comprises a respective RFID Tag 30 (Figure 5) having a corresponding and univocal non-modifiable EPC code, which defines the univocal identifying information A of the corresponding identifier element 20. Preferably, the RFID Tag 30 is an RFID label Tag. However, for the purposes of the present invention, any other commercially available RFID Tag may possibly be used to identify the respective metal component 10.

The RFID Tag 30 of each identifier element 20 is detectable by radio frequency, in particular by means of at least one UHF antenna or similar detection device, optionally according to a detection radius of between 0.1 meters and 10 meters, more optionally between 5 meters and 8 meters. Of course, the detection radius may vary according to contingent needs and is a function of the inherent characteristics of the RFID Tag 30, as well as the powers of the UHF antenna used to detect the RFID Tag 30.

In order to enable the RFID Tag 30 of each identifier element 20 to be easily fixed to a respective metal component 20, such RFID Tag 30 has dimensions between 5x5 mm and 80x80 mm, optionally between 10x10 mm and 55x55 mm, more optionally between 13x13 mm and 52x52 mm, in particular between 36x13 mm and 52x13mm.

In order to ensure a high standard of RFID Tag 30 detection of each identifier element 20 to be fixed or fixed on a respective metal component 10, while eliminating or minimizing any possible and undesirable interference due to the material from which the metal components 10 are made, each RFID Tag 30 fixed is provided with anti-metal technology (also referred to as anti-metal or on-metal), i.e. a technology which uses the respective metal component 10 to amplify the signals between the RFID Tag 30 and any UHF detection antenna.

In order to facilitate the fixing of the RFID Tag 30 of each identifier element 20 on a respective metal component 10 of a relative plurality of components, the RFID Tag 30 is suitably housed in a protective capsule 40 which is fixable on a respective metal component 10.

According to a first embodiment of the present invention, the RFID Tag 30 of each identifier element 20 is housed in a corresponding housing seat 40a made in the body 40c of a respective protective capsule 40 in such a way that upon fixing of the latter to the respective metal component 10, the corresponding RFID Tag 30 is engaged, in particular, permanently on said metal component 10.

According to a second embodiment of the present invention, the RFID Tag 30 of each identifier element 20 is embedded in the body 40c of a corresponding protective capsule 40 in such a way that the fixing of the latter to a corresponding metal component 10 also results in the consequent fixing of the corresponding RFID Tag 30 to that metal component 10.

More in particular, the protective capsule 40 housing the RFID Tag 30 of each identifier element 20 has at least one engagement surface 40b arranged to accommodate at least one adhesive fixing substance capable of ensuring permanent engagement of the protective capsule 40 on the respective metal component 10. In order to ensure satisfactory engagement of the protective capsule of the RFID tag 30 of each identifier element 20, the engagement surface 40b of the latter is at least partially, optionally completely, countershaped to at least an outer surface portion of the respective metal component 10. In this way, the coupling between the engagement surface 40b of the protective capsule 40 and the corresponding outer surface portion of the respective component 10 are perfectly coupled and attestable to each other.

According to a further embodiment of the present invention, the fixing step F3 of at least one identifier element 20 on each metal component 10 is carried out by fixing the respective RFID tag 30 by bonding the corresponding protective capsule 40 onto the respective metal component 10. The bonding of the protective capsule 40 on the respective metal component 10 is carried out at the engagement surface 40b thereof. In other words, the engagement surface 40b of the protective capsule 40 is used and exploited as a support for the adhesive fixing substance that should ensure the permanent engagement of the protective capsule 40 to the corresponding metal component 10.

In order to arrange the engagement surface 40b of each protective 40 capsule to accommodate and support the above mentioned adhesive fixing substance, the engagement surface of each protective 40 capsule is arranged by an appropriate surface treatment and cleaning involving the use of isopropyl alcohol or a similar cleaning substance. Advantageously, the adhesive fixing substance comprises a one-component or two-component glue, epoxy or acrylic or polyurethane, which is deposited, for example by means of a dispensing gun or similar application tool comprising at least one dispensing nozzle, on the corresponding engagement surface 40b of the corresponding protective capsule 40. Thereafter, the protective capsule 40 is placed on the respective metal component 10 with the engagement surface 40b adhered to a corresponding surface portion of said metal component 10, according to a position suitable for ensuring the best adhesion between the protective capsule 40 and the metal component 10, allowing detection of the RFID Tag 30 in any situation, and protecting the same from possible impact and/or tampering attempts.

As an alternative to using a glue with a pasty or semi-liquid or gel-like consistency, the adhesive fixing substance can be defined by, and in, a double-sided tape. Again, the adhesive fixing substance on the double-sided tape is an epoxy or acrylic or polyurethane-based bonding substance, but in foam form. Bonding of the protective capsule 40 by the use of double-sided tape first involves the removal, from the latter, of a first protective film in order to make available a respective first adhesive portion of the double-sided tape. Once the first protective film has been removed from the double-sided tape, the first adhesive portion of the latter is applied to the respective engagement surface 40b of the respective protective capsule 40 of the RFID tag 30 of the respective identifier element 20 to be fixed. At this point, a second adhesive portion of the double-sided tape, facing away from the first adhesive portion, is made available by the removal of a second protective film. Removal of the second protective film makes the double-sided tape, and therefore the protective capsule 40 to which it is fixed, ready to be engaged to the respective metal component 10. The engagement surface 40b of the respective protective capsule 40 is placed in contact with an outer surface portion of the respective metal component 10 such that the second adhesive portion of the double-sided tape adheres at least partially, particularly completely, to the outer surface of the respective metal component 10.Regardless of the mode of fixing of the protective capsule 40 on the respective metal component 10, the positioning of the protective capsule 40 is carried out according to a suitable position in order to ensure the best adhesion between it and the metal component 10, to allow the detection of the RFID Tag 30 in any situation and to protect the same from possible impacts and/or tampering attempts. Furthermore, the positioning of the protective capsule 40 and therefore of the corresponding identifier element 20 with the respective RFID Tag 30 on the respective metal component 10 is facilitated and simplified by the use of at least one suitably designed positioning tool. Once the protective capsule 40 has been positioned with its engagement surface 40b in contact with the respective outer surface portion of the respective metal component 10, the protective capsule 40 is held in that position for a period of time sufficient to ensure complete polymerization of the adhesive fixing substance (glue or double-sided tape), optionally a period of time of not less than 12 hours, more optionally not less than 18 hours, in particular not less than 24 hours, more particularly not less than 48 hours, preferably not less than 72 hours.

The retention of the engagement surface 40b of the respective protective capsule 40 in contact with the respective outer surface portion of the corresponding metal component 10 is carried out by the use of at least one respective appropriately designed retaining support. Advantageously, the retaining support is a magnetic retaining support that interacts significantly with the metal material of the metal components 10 to which the protective capsules 40 provided with respective RFID tags 30 of the corresponding identification elements 20 are fixed.

According to an advantageous aspect of the present invention, the positioning device includes and/or defines the retaining support or, conversely, the retaining support includes and/or defines the positioning device, such that the positioning and retention of each protective capsule 40 on the respective metal components 10, are ensured by the same tool, instrument, or utensil.

As an alternative, or in addition to the above described method of fixing which is based on the use of an adhesive fixing substance appropriately applied to the engagement surface 40b of each protective capsule 40 to be attached to the respective metal components 10, each protective capsule 40 may also be provided with at least one hooking portion (not shown in the attached Figures) configured to engage at least one structural portion of the corresponding metal component 10, whereby the fixing step F3 of the corresponding identifier element 20 is also carried out by engaging the protective capsule 40 to the corresponding metal component 10. In this situation, the fixing of the RFID tag 30 of a respective identifier element 20 to the respective metal component 10 is carried out and ensured by the interaction between the hooking portion of the respective protective capsule 40 and the corresponding structural portion of the respective metal component 10.The protective capsule 40 of the RFID tag 30 varies depending on the type of metal component 10 to which it is fixed, as well as the position of fixing to that metal component 10. In fact, if one examines the uprights 11 shown in Figures 8 through 10, it is possible to see that depending on the different fixing position, the protective capsules 40 have different shapes and structures.

With reference to the upright 11 shown in Figure 8, the protective capsule 40 has a substantially cap-like shape in that it closes the cavity of the upright 11 through one of its end openings. As seen in Figure 19, the cap-like protective capsule 40 has a body 40c provided with a first portion 40d, which acts as a protective shield against shocks and impacts. The first portion 40d has substantially the same diameter, or a proximal diameter, to the outer diameter of the upright 11 into which it is applied. The cap-like protective capsule 40 also has a second portion 40e, integral with the first portion 40d and arranged to be inserted into the cavity of the upright 11. The second portion 40e is provided with two annular bulges 40f that are slightly larger than the inner diameter of the cavity of the upright11 so that the cap-like protective capsule 40 remains engaged at the opening of the corresponding upright 11 by interference. The housing 40a for the fixing of the respective RFID Tag 30 is cut out between the first portion 40d and the second portion 40e, while the engagement surface 40b is defined by a flat surface of the first portion 40d that faces the annular bulges 40f of the second portion 40e.

With reference, on the other hand, to post 11 in Figure 9, the protective capsule 40 has a substantially collar-like shape so that it can externally engage the structure of the respective post 11, and in any case of any metal component 10 presenting a cylindrical or tubular shape.

According to the embodiment shown in Figure 20, the body 40c of the collar protective capsule 40 has a substantially cylindrical tubular structure with a structural break that allows it to spread apart when engaged to a respective upright 11. The inner surface of the protective capsule 40 collar defines the engagement surface 40b of the same. In addition, an area of the inner surface of the protective collar capsule 40 is cut into the housing 40a for the engagement of the respective RFID tag 30.

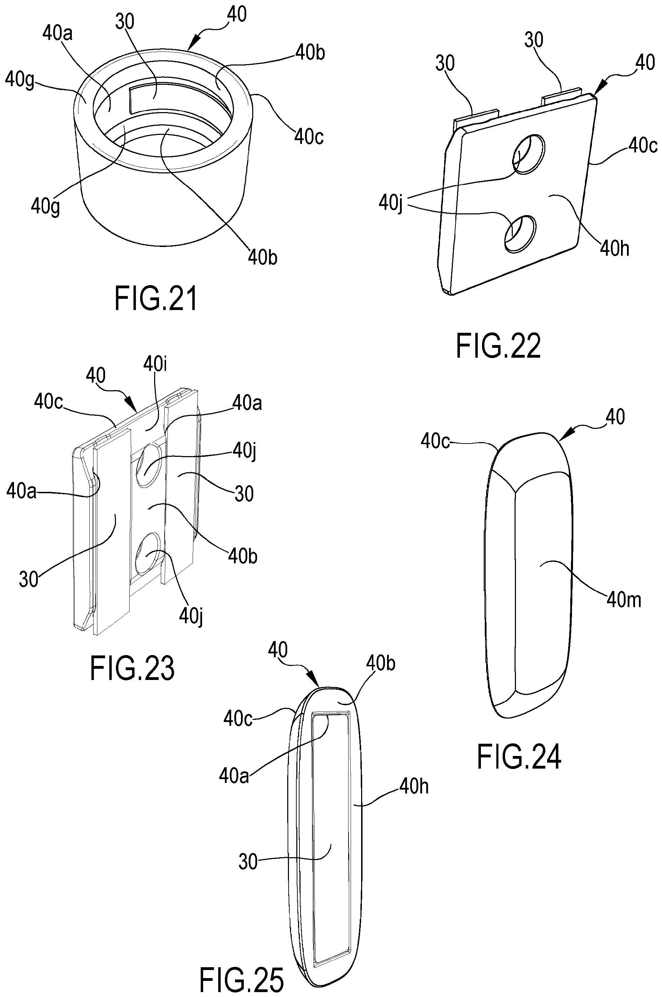

According to the embodiment shown in Figure 21, the body 40c of the collar protective capsule 40 has a substantially cylindrical tubular structure, one inner surface of which, interposed between two inner annular portions 40e, defines the housing 40a for the respective RFID Tag 30, while the two inner annular portions 40g define the engagement surfaces 40b of the same.

The same types of capsules described above are also suitable for the fixing of RFID Tags 30 to the posts 15a of the upright frames 15, to the load-bearing portions 16b and perpendicular crossing bars 16c of the guardrails 16, and to the tubular elements 17b of the finials 17, of the frame scaffolding 1.

According to the ledger or bracing 12 with respective clamp portions 12c shown in Figure 13, the protective capsule 40 (Figures 22 and 23) has a substantially flat body 40c with a substantially square or rectangular outline arranged to be placed in the cavity 12e of the clamp portion 12c of the respective ledger or bracing 12. The body 40c of such a protective capsule 40 has an outer side 40h (Figure 22) and an inner side 40i (Figure 23) defining the engagement surface 40b of the protective capsule 40 on which two housing seats 40a are cut for the fixing of two corresponding RFID tags 30. In addition, the protective capsule 40 is provided with two through openings 40j for the engagement of respective fixing buttons (not shown) that engage, through these through openings 40j, respective openings located in the cavity 12e of the clamp portion 12c of the ledger or bracing 12.

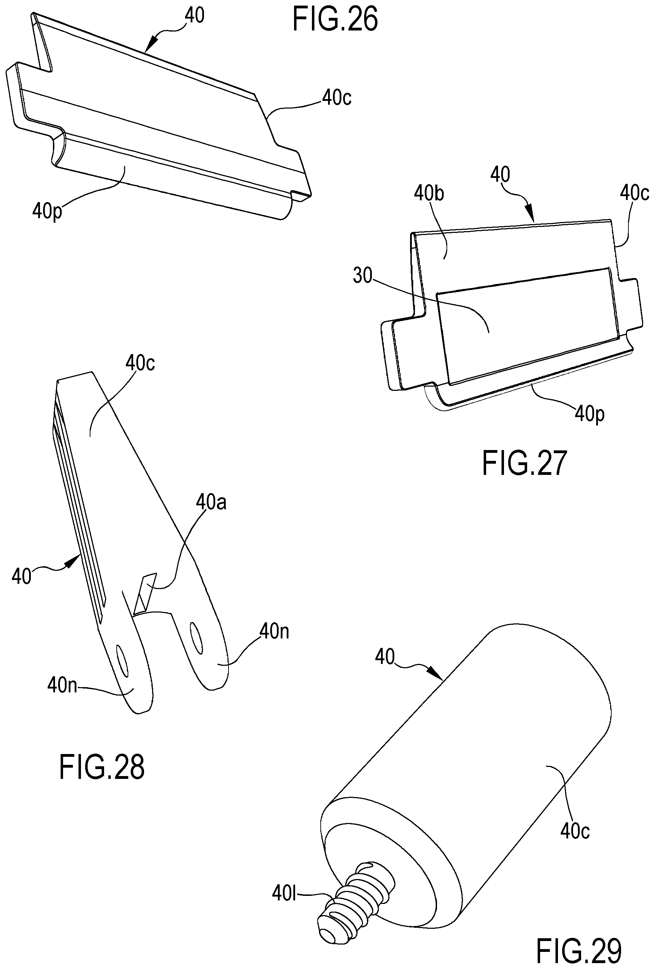

According to the leger or bracing 18 with respective engagement joints 18a shown in Figure 15, the protective capsule 40 (Figure 28) has a substantially wedge-shaped body 40c provided with a housing 40a for the engagement of an RFID Tag 30 interposed between two fixing protuberances 40k at one end 18d of the respective engagement joint 18a that is constrained to the ledger/bracing 18.

Referring instead to the ledger or bracing 18 with respective engagement joints 18a shown in Figure 16, the protective capsule 40 (Figure 28) has a substantially cylindrical body 40c within which an RFID Tag 30 can be housed. The cylindrical body 40c is provided with a threaded protrusion 40l that is screwable onto a free end 18e of the respective engagement joint 18a.

With reference to the toeboard 14 shown in Figure 12, the protective capsule 40 (Figures 24 and 25) has a half-shell body 40c and/or semi-ovoid shape. As can be seen in Figures 14 and 15, the half-shell body 40c of the protective capsule 40 has a rounded outer side 40m and a substantially flat inner side 40n on which the engagement surface 40b and a housing 40a for fixing a respective RFID tag 30 are defined.

Referring to the plank 13 shown in Figure 11, the protective capsule 40 (Figures 26 and 27) has a body 40c with a substantially flat inner side 40o on which an engagement surface 40b arranged to support the adhesive fixing substance and at least one housing seat 40a for fixing and/or housing a respective RFID Tag 30 are defined. The body 40c of the protective capsule 40 further has at least one curved portion 40p configured to engage a respective edge of the short side 13b of the respective plank 13.

As an alternative to, or in addition to, the fixing step F3 of the protective capsule 40 to the respective metal component is carried out by executing at least one welding operation of a metal structure (not shown in the attached Figures) suitably associated with the protective capsule itself. In detail, the welding operation of the metal structure associated with the protective capsule 40 involves the execution of a spot welding at one or more portions of the metal structure emerging from the protective capsule 40 and in contact relationship with the target surface of the respective metal component 10.

According to a first embodiment of a protective capsule 40 weldable to a metal component 10 of a scaffolding 1, the respective metal structure comprises a one-piece plate, flat or curved depending on the target metal component 10 and the shape that the protective capsule 40 must have in order to be fixed to said metal component 10. The one-piece plate of the metal structure of the protective capsule 40 is co-moulded thereon and has a main portion that supports, in direct contact, a respective RFID tag 30. The main portion of the one-piece plate of said metal structure and the respective RFID Tag 30 which is fixed to said metal structure are enclosed, preferably hermetically, by the protective capsule itself. The one-piece plate of the metal structure of the protective capsule 40 further has one or more attachment portions or appendages emerging and protruding from said capsule to enable welding operations of the metal structure and, therefore, of the protective capsule 40 with the respective RFID Tag 30 to the respective metal component 10 of a scaffolding 1.

According to a second version of the protective capsule 40 weldable onto a metal component 10 of a scaffolding 1, the respective metal structure also comprises a one-piece plate having a shape which is more adapted to the shape of the capsule and of the respective target metal component 10, the one-piece plate of which supports, in direct contact, the intended RFID tag 30, so that the same is hermetically isolated with respect to the outside. However, in this case, the one-piece plate of the metal structure does not provide any emerging or protruding portion from the protective capsule 40, remaining totally within the same. Additional metal plates detached and separated from the one-piece plate of the metal structure bearing the RFID tag 30 are provided and joined to the protective capsule 40, for example by co-moulding or by other joining and joining techniques, in order to provide structural elements suitable for spot welding on the respective metal component 10 of a scaffolding 1.

Since the metal components 10 of the scaffolding 1 are permanently arranged outdoors and are therefore permanently exposed to precipitation and different climatic conditions, the sealing of the RFID tag 30 by the protective cap 40 ensures the technically advantageous effect of preventing undesirable ingress of water, moisture and dirt over time.

The one-piece plate of the metal structure of the protective capsule 40 is advantageously made of stainless steel, a material which is both optimally suited for supporting the respective RFID tag 30 and for being welded to the respective metal component 10 of a frame 1.

Advantageously, spot welding allows the protective capsules 40 of the RFID tags 30 to be joined quickly and conveniently using welding devices and equipment commonly used in industry. Of course, different types of spot welding can be envisaged, but the preferred one, given the metallic nature of the components 10 of the scaffolding 1 and the structures associated with the protective capsules 40 of the RFID tags 30, is resistance welding.

In order to give to the protective capsules to be used for fixing the identifier elements 20 on the respective metal components 10 high mechanical and/or physical properties, such as, for example, high impact and shock resistance, high resistance to chemical agents, high resistance to weathering typical of outdoor uses, and transparency to radio frequencies, particularly UHF frequencies, the protective capsules 40 of the RFID tags 30 of the identifier elements 20 to be fixed or fixed to the metal components 10 are made of a polymeric material.

In some situations, it is preferable for protective capsules 40 to be made of TPU thermoplastic polyurethane so that they exhibit high resistance to the impacts or shocks and weathering to which metal components 10 are subjected when installed outdoors. Since TPU polyurethane is an elastomer, the protective capsules 40 made from this material exhibit high absorption of impact energy as they are able to deform elastically without reaching the point of rupture or yielding under typical use conditions. In this way, protective capsules 40 deform by absorbing the shocks or impacts typical of handling and use of metal components 10 in warehouses, during transportation, and at construction sites.

Advantageously, protective capsules 40 have a hardness expressed in Shore A of not less than 80A, optionally not less than 90A, in particular substantially equal to 95A.

In other situations, it is preferable for the protective capsules 40 to be made of high-density HDPE polyethylene, especially when RFID tags 30 of the respective identification elements 20 are fixed to metal components 10 such as ledgers and bracings 12, 18. Protective capsules 40 made of high-density HDPE polyethylene have high resistance to tampering attempts, as well as high UV and chemical resistance.

However, it is also possible to provide for protective capsules 40 to be made of acrylonitrile butadiene styrene ABS or high-impact polystyrene HDPS or polycarbonate PC or a mixture of amorphous thermopolymer and ASA/PC polycarbonate.

The protective capsules 40 of the RFID tags 30 of the respective identifier elements 20 to be fixed or fixed on the respective metal components 10 are obtained and created by a forming process by additive manufacturing or injection molding or thermoforming, among which, injection molding and thermoforming are preferred over additive manufacturing as they allow the production of protective capsules 40 with high and superior performance. Also co-moulding can be carried out for manufacturing the protective capsules 40.

Once the step of fixing F3 all identifier elements 20 with their respective RFID tags 30 on the corresponding metal components 10 of the plurality of components arranged in the preparation station 100 is completed, the production and storage method M1 includes at least one step of creating F4 (schematized in Figure 2) a univocal digital twin 60 of each metal component 10 in a corresponding digital environment B.

Advantageously, the univocal creation of the digital twins 60 of the metal components 10 of the respective plurality of components manufactured F1 and/or arranged F2 is performed by carrying out at least one simultaneous and massive detection operation F4.1 of the univocal identification information A present in each of the identifier elements 20 fixed to the metal components 10. Such a step of creating F4 the univocal digital twin 60 of each metal component 10 is carried out simultaneously and massively by crossing the respective metal components 10 through a detection gate 101 (Figure 4) provided with at least one radio frequency detection apparatus having at least one UHF antenna. The crossing of the detection gate 101 by the metal components 10 of a respective plurality of components is accomplished by simultaneously crossing all metal components 10 through the detection gate 101 or by sequentially crossing discrete groups of metal components 10 of the same plurality of components. The detection gate 101 operates as a scanning device that recognizes and identifies each identifier element 20 present on the crossing metal components 10.

In addition to, or as an alternative to, the use of the above mentioned detection gate 101, the step of creating the univocal digital twin 60 in the corresponding digital environment B of each metal component 10 of one or more plurality of components of the same type is carried out by using a confined detection region 102, in particular, a controlled chamber provided with at least one radio frequency detection apparatus having at least one UHF antenna and suitably arranged between the preparation station 100 and a respective warehouse 103 of the manufactured and produced metal components 10. In this case, in order to create the digital twin 60 of each metal component 10 of the respective plurality of components, the plurality or the pluralities of metal components 10 of the same type are positioned and stationed within the corresponding confined detection region 102 to be subsequently subjected to a simultaneous and massive detection operation F4.1 of the univocal identification information A of the identifier elements 20 fixed on all metal components 10 located within the confined detection region 102.

The simultaneous massive detection operation F4.1 of the univocal identification information A of the identifier elements 20 of the metal components 10 results in the execution of an assignment operation F4.2, for each metal component 10, of the univocal identification information A of the respective at least one identifier element 20.

Going into the details of the detection operation F4.1, the provided detecting apparatus is configured to detect the univocal EPC code of the RFID Tag 30 of each identifier element 20 as its univocal identification information A to be assigned F4.2 to the respective metal component 10 as its univocal identification information.

In the case where two or more identifier elements 20 are fixed on a respective same metal component 10 of a relative plurality of components under detection, such as ledgers and bracings 12, 18, the operation of detection the univocal identification information A is carried out by detecting the univocal EPC code of the RFID Tag 30 of only one of the identifier elements 20 fixed on the same metal component 10, as the other identifier element(s) 20 fixed on the same metal component 10 have the same univocal EPC code.

The simultaneous massive creation step F4 of the univocal digital twin 60 in the corresponding digital environment B of each metal component 10 under detection also includes an assignment operation F4.3, for each digital twin 60 under creation, of the corresponding type of the respective metal components 10 under detection. In particular, when metal components 10 of the same component type undergo a creation step F4 of the respective digital twins 60, each digital twin 60 being created is matched with the univocal identification information A of the respective identifier element(s) 20 fixed to the respective metal component 10, as well as an indication of the type of the respective metal component 10 for which the respective digital twin 60 was created.

Furthermore, the simultaneous massive creation step F4 of each digital twin 60 in the corresponding digital environment B of each metal component 10 under detection includes, or is followed by, at least one creation operation F4.4, for each digital twin 60 created, of a univocal permanent register R of events E (schematically shown in Figure 3), which is arranged to receive in entry and/or loading one or more data or events E indicative of a change in one or more status conditions of the respective metal component 10, from the time of creation of the respective digital twin 60.

Advantageously, the permanent register R of events E of each digital twin 60 created is not removable or erasable from the corresponding digital environment B so it perpetually remains in that digital environment B linked to the respective digital twin 60. Each event E entered in the permanent register R of events E relating to the digital twin 60 of each metal component 10 is queued to the event(s) E previously entered in the same permanent register R of events E. In addition, each event E entered into that permanent register R is not removable or erasable. In fact, the permanent register R of events E allows only the entry or loading of new events E, but does not allow the deletion or modification of events E previously entered.

Each event entered into the permanent register R of events E usually corresponds to a change of a status condition of the corresponding metal component 10 for which the corresponding digital twin 60 replays the actual status condition of the respective metal component 10. Advantageously, the entry or loading into the permanent register R of events E relating to the digital twin 60 of each metal component 10 of new data or events E also indicative of the change of one or more status conditions of the latter is carried out, optionally automatically, whenever the actual status condition of the metal component 10 is detected and recorded.

Preferably, at the time of creation F4 relating to the digital twin 60 of each metal component 10 under detection, at least the status condition indicative of the successful creation of the univocal digital twin 60, together with the type of the detected metal component 10, is entered into the respective permanent register R of events E.

The digital environment B in which the digital twins 60 of the metal components 10 are created comprises a computer network, such as a LAN, MAN, WAN or SAN. Preferably, the digital environment B is based on a distributed registry technology or system that can be read and modified by multiple nodes in a network, such as a blockchain. Therefore, the digital environment B includes a computer network, such as the Internet, based on a blockchain technology and/or platform.

After the creation step F4 relating to the digital twin 60 of each metal component 10 of the respective plurality of components is completed, the production and storage method M1 includes at least one storage step F5 of the metal components 10 of the respective plurality of components in a respective suitably prepared warehouse 103. The storage F5 of each metal component 10 in the respective warehouse 103 is carried out after the execution of an entry operation F5.1 in the permanent register R related to the digital twin 60 of each metal component 10, of a new event E indicative of a status condition of the occurred storage. The entry operation F5.1 is performed simultaneously and massively on the permanent register R of events E of all the digital twins 60 of the metal components 10 of the plurality of components that are being stored F5 by a simultaneous and massive action of interacting with the identifier elements 20 of the metal components 10 through the corresponding identifying information A.

Similar to the creation step F4 of the respective the digital twin 60 of each metal component 10 of the respective plurality of components, the entry operation F5.1 mentioned above is carried out by the use of at least one corresponding detection gate 101' (Figure 4) or by at least one additional confined detection region 102' (Figure 4), which can be located near or at the entrance or even within the corresponding warehouse 103.

With reference to the detection gate 101' used prior to the storage F5, the operation of inserting F5.1 into the respective permanent register R of events E of each digital twin 60 of the respective storage condition in the corresponding warehouse 103 is carried out simultaneously and massively by crossing all metal components 10 to be stored through the corresponding detection gate 101' which is provided with at least one radio frequency detecting apparatus having at least one UHF antenna. The crossing of the detection gate 101' by the metal components 10 to be stored is done by simultaneously crossing all metal components 10 through the detection gate 101' or by sequentially crossing discrete groups of metal components 10 of the same plurality of components. Also in this situation, the detection gate 101' operates as a scanning device that recognizes and identifies each identifier element 20 to RFID tag 30 present on the metal components 10 crossing through the detection gate 101'. Referring instead to the use of a 102' confined detection region as an alternative to the detection gate 101' just mentioned, it can be defined by a controlled chamber provided with at least one radio frequency detecting apparatus having at least one UHF antenna. In this case, the metal components 10 to be stored are stationed within the confined detection region 102' to be subjected to a detection operation that consists of detecting the univocal identification information A defined by the EPC codes of the corresponding RFID tags 30 of the identifier elements 20 of the metal components 10 to be stored. Through such a detection operation, the new condition of the occurred storage in the respective warehouse 103 is entered F5.1 simultaneously and massively into the permanent register R of events E relating to the digital twin 60 of each metal component 10 in storage, optionally automatically.

Alternatively to the detection gate 101' and/or the confined detection region 102', the entry operation F5.1 of the storage step F5, may also be carried out by the use of at least one interaction device 104, in particular portable, configured to communicate with the RFID Tag identifier elements 20 of each metal component 11 to be stored. The interaction device 104 is also provided with at least one detection apparatus operating in radio frequency, optionally by means of at least one UHF antenna. In detail, the portable interaction device 104 includes a RFID Tag reader gun 30 having a wide range.

When two or more identifier elements 20 are fixed to each of the same metal component 10 of the respective plurality of components, such as in the case of the ledgers or bracings 12, 18, the operation of detecting the univocal identification information A is carried out by detecting the univocal EPC code of the RFID Tag 30 of only one of the identifier elements 20 fixed to the same metal component 10, as the other identifier element(s) 20 fixed to the same metal component 10 have the same univocal EPC code. In this way, it is possible to recognize each metal component 10 under detection even if it has two or more RFID Tags 30.

As opposed to the creation step F4 relating to the digital twin 60 of each metal component 10 which must be carried out on metal components of the same type, the operation of detecting the condition of the occurred storage during the storage step F5 can also be carried out on a mixed plurality of metal components 10 since such metal components 10 have already been univocally replicated in the digital environment B by the creation of a corresponding and univocal digital twin 60. Therefore, if a mixed plurality of metal components 10 were subjected to the detection operation aimed at storage in the warehouse 103, the different metal components 10 would be detected and recognized by the corresponding univocal EPC code of the RFID Tag(s) 30 of the respective identifier elements 20, with an automatic recording of the respective new status condition on the permanent register R of events E of the respective digital twin 60.

The entry operation F5.1 described above of the storage step F5 is followed by at least one interaction step F6 with the identifier element 20 of each metal component 10 in storage, to insert in the permanent register R of events E of the respective digital twin 60, at least one data related to a stationary position P of the respective metal component 10 within the warehouse 103. The interaction step F6 results in the recording in the permanent register R of events E relating to the digital twin 60 of each metal component 10 in storage or stationed within the warehouse 103 of a new status change of the respective metal component 10 from the condition of the occurred storage to the condition of the occurred stationing, with an exact indication of the location of the respective stationing position P. The interaction step F6, mentioned above, is carried out by at least one simultaneous and massive detection operation F6.1 of the univocal identification code A of the identifier elements 20 to RFID tag 30 of all metal components 10 of the same plurality of components stationed in the warehouse 103.

Preferably, the stationing of the metal components 10 of the same plurality of components within the warehouse 103 is carried out by placing the entire plurality of components in a corresponding stationing position P. In this way, the metal components 10 of each plurality of components have the same stationing position P. However, it should be considered that it is possible to station metal components 10 of the same plurality of components, according to different stationing positions P, within the warehouse 103.

According to a possible embodiment of the present invention, the above-mentioned interaction step F6 is carried out simultaneously and massively, in particular automatically, by means of one or more detecting apparatuses distributed within the warehouse 103. Such detecting apparatus operates in radio frequency, for example, by means of respective UHF antennas. The detecting apparatuses are configured to simultaneously recognize all metal components 10 of the respective plurality of stationed components by means of their respective RFID tag 30 identifier elements 20.

According to a further embodiment of the present invention, it is also possible for the above mentioned interaction step F6 to be carried out simultaneously and massively by the use of at least one interaction device 104 analogous to the one previously described for carrying out the entry operation F5.1 of the storage step F5. In this case, an operator equipped with the relevant RFID gun performs the recognition and detection of the univocal identification information A of the identifier elements 20 a RFID tag 30 on site. By means of the univocal identification information A, the system provides for recording on the respective permanent register R of events E of the respective digital twins 60 the change of the status condition of the respective metal components 10 from being stored to being stationed, with an indication of the exact location of the corresponding stationing positions P.

The method further comprises a first step of loading F7 into the permanent register R of events E of the respective digital twins 60 of a new event E indicative of a change in a status condition of one or more metal components 10 stationed in the warehouse 103 from a condition of the occurred stationing to a condition of the occurred assignment of such metal components 10 to a respective fulfillment order O of a supply order and/or delivery to a third party or a transfer of storage to a physical location other than the respective warehouse 103. When the first loading step F7 is executed, the new event E relating to the the occurred assignment of the corresponding metal component 10 to a corresponding fulfillment order O, is entered into the permanent register R of events E of the corresponding digital twin 60 in such a way as to queue up with the last previously entered data or event, which corresponds, generally to the status condition of the occurred stationing, unless other status conditions have been recorded between the condition of the occurred stationing and the condition of the occurred assignment. The occurred assignment of a metal component 10 to a respective fulfillment order O results in the exclusion of that metal component 10 from any and further assignments to other fulfillment orders O issued and/or received. In other words, the assignment status condition has a function of reserving the respective metal component 10 for a corresponding O fulfillment order.

The first step of loading F7 of the occurred assignment state condition is followed by a second step of loading F8 into the permanent register R of events E of the respective digital twins 60 of a new event E indicative of a further change in the state condition of each metal component 10. In detail, the second loading step F8 formalizes, for each metal component 10 previously assigned to a given fulfillment order O, the transition from the condition of the occurred assignment to a condition of the occurred execution of the respective fulfillment order O, in which each metal component 10 of that fulfillment order O is transferred from the respective warehouse 103, clearing the respective stationary position P occupied therein. In particular, when a respective fulfillment order O is executed, the new event E inherent in the status condition of the occurred execution of the respective fulfillment order O is recorded in the permanent event register R of events E of each digital twin 60 afferent to a respective metal component 10 that is part of such an evasion order O. This new event E queues up the last event E entered in the respective permanent register R of events E, i.e. the occurred assignment of the respective metal component to a respective fulfillment order O.

Similar to the previously described detection operations, the first and second loading steps F7, F8 are also carried out by recognition and detection of the identification information A of the identifier elements 20 fixed on the metal components concerned. The loading steps F7, F8 are also carried out by the use of suitable RFID Tag 30 detection apparatuses of the identifier elements 20 fixed on the metal components 10 present and stationed in the warehouse 103.

Again, it is possible to take advantage of a plurality of detecting apparatuses provided with corresponding UHF antennas properly distributed within warehouse 103, or detection gates or confined detection regions similar to those dedicated to storage F5. In addition, it is also possible to envisage the use of appropriate RFID guns that are used directly by operatives to interact with the RFID Tags 30 of the components stationed in warehouse 103 as already described in relation to the detection of stationed or stationed metal components 10.

In order to enable the execution of the production and storage method M1 described above, there is also a respective system for managing and tracking metal components 10 for scaffolding 1 from the manufacture F1 and/or arrangement F2 of them at the respective preparation station 100 to the delivery and/or sale of these metal components 10 to third parties or their stock transfer to a place other than the warehouse 103.

The management and tracking system includes the detecting apparatus to simultaneously and massively detect the univocal identification information A present in the identifier elements 20 to RFID tags 30 fixed to the metal components 10 being tracked.

In addition, the management and tracking system is in connection with the digital environment B which it exploits through corresponding access keys and/or properly dedicated algorithms.

In order to manage the communication between the detecting apparatus and the RFID 30 Tag identifier elements 20 as well as the management of the digital environment B and the updating of the digital twins 60 of the metal components 10, the system is provided with one or more programmable electronic units provided with respective communication interfaces to dialogue with the detecting apparatus and the digital environment B management platform through respective management software.

Through the management and tracking system, it is also possible to execute a tracking method M2 of the metal components 10 manufactured and arranged at the preparation station, which, from the arrangement step F2, is similar, if not identical, to the above described production and storage method M1.

### Advantages

The object of the present invention makes it possible to solve the drawbacks found in the known technique while also enabling the achievement of numerous advantages.

First of all, the presence of an RFID Tag on each metal component allows all data, information and the current status condition of each metal component to be monitored at any time and in any place by special detection apparatuses without errors or excessive long processing time.

In addition, the permanent event log of each digital twin allows the maintenance of an unaltered history of data, information, and changes in the status conditions of each metal component, providing an accurate view of the life of each metal component.

The features of each protective capsule and the adhesive substances used allow for a very strong fixing which also serves as a guarantee seal against any tampering attempts. In fact, tampering attempts are not easy to carry out and inevitably lead to breakage or obvious damage to the capsule and/or RFID tag.

Finally, the material, shape, and location of the capsules on the metal components protect the RFID Tags from the shock that the metal components are normally subjected, during transportation, scaffolding assembly and disassembly, warehouses, and construction sites.

## Claims

1. Method of production and storage (M1) of metal scaffolding components (1), including the following steps:
- manufacturing (F1) and arranging (F2) at least a plurality of metal components (10) for scaffolding (1);
- fixing (F3), on each metal component (10) of the respective plurality of components, at least one identifier element (20) configured to be associated with one or more information data relating to the respective metal component (10), the at least one identifier element (20) presenting at least one univocal identifying information (A) configured to also univocally identify the respective metal component (10) on which it is fixed;
- creating (F4) an univocal digital twin (60) of each metal component (10) of the related plurality of components, in a corresponding digital environment (B) wherein the digital environment (B) comprises a computer network based on a blockchain technology or platform, the digital twins (60) being univocally created (F4) by a simultaneous and massive operation of detecting the identifying information (A) present in the at least one identifier element (20) of each metal component (10) manufactured and arranged, the step of creating (F4) each digital twin (60) comprising, or being followed by, a creating operation (F4.4), for each digital twin (60), of a permanent register (R) of events (E), which is non-removable and non-erasable, wherein each event (E) identifies a certain status condition of the respective metal component (10) and is entered into the respective permanent register (R), each event (E) entered queuing one or more events (E) previously entered, each event (E) not being removable, erasable or editable;
- storing (F5) each metal component (10) of the related plurality of components, in a corresponding warehouse (103);
- interacting (F6) with the identifier element (20) of each metal component (10) by means of the respective at least one identifying information (A), to enter one or more events (E) into the permanent register (R) of events (E) each time the respective metal component (10) presents a change of status, the permanent register (R) of events (E) relating to the digital twin (60) of each metal component (10) keeping track of each change of state of the latter.

2. Method of production and storage (M1) according to the previous claim, wherein the step of fixing (F3) the at least one identifier element (20) to each metal component (10) of a respective plurality of components manufactured and arranged, comprises the fixing of a respective RFID Tag (30) provided with corresponding and univocal non-modifiable EPC code which defines the univocal identification information (A) of the corresponding identifier element (20), in particular the step of fixing (F3) of the at least one RFID Tag (30) on each metal component (10) being carried out according to the following sub-steps:
- placing the RFID Tag (30) in a corresponding protective capsule (40);
- fixing, optionally by the use of at least one adhesive fixing substance, the protective capsule (40) to the respective metal component (10).

3. Method of production and storage (M1) according to any one of the previous two claims, wherein the step of creating (F4) the univocal digital twin (60) of each metal component (10) of the relative plurality of components in the corresponding digital environment (B), is performed by carrying out a simultaneous and massive detection operation (F4.1) of the identification information (A) of the identifier elements (20) fixed on the metal components (10) of the respective plurality of components, in particular, the identification information (A) of the identifier elements (20) being defined by the univocal EPC codes of the corresponding RFID tags (30), optionally, the detection operation (F4.1) determining, for each metal component (10) being detected, the automatic assignment of the at least one respective identifier element (20) as the univocal identification information (A) of the corresponding metal component (10).

4. Method of production and storage (M1) according to any of the previous claims, wherein the step of creating (F4) the univocal digital twin (60) of each metal component (10) of one or more plurality of components in the corresponding digital environment (B), is carried out simultaneously and massively by:
- the crossing of the respective metal components (10) through a detection gate (101) provided with at least one detection apparatus, in particular operating in radio frequency, optionally by means of at least one UHF antenna, in particular the crossing of the detection gate (101) by the metal components (10) being carried out by simultaneously crossing all the metal components (10) to be detected or according to a sequential crossing of groups of metal components (10) of the same plurality of components to be detected,
or through the following steps:
- positioning the metal components (10) of one or more plurality of components within a corresponding confined detecting region (102) provided with one or more detecting apparatuses, in particular operating in radio frequency, optionally by means of at least one UHF antenna, more optionally, the confined detecting region (102) being limited by a controlled chamber;
- detecting, simultaneously and massively, all univocal identification information (A) of the identifier elements (20) fixed on the corresponding metal components (10) in the confined detecting region (102).

5. Method of production and storage (M1) according to any one of the previous claims, the step of storing (F5) each metal component (10) of a relative plurality of components in the corresponding warehouse (103), is carried out upon the entry (F5.1) in the permanent register (R) relating to the digital twin (60) of each metal component (10) of an event (E) indicative of a status condition of an occurred storage, the entry (F5.1) of the occurred storage being carried out simultaneously and massively on the permanent register (R) of events (E) of the digital twins (60) of the metal components (10) of the plurality of components in storage through an interaction with the identifier elements (20) of the metal components (10) themselves.

6. Method of production and storage (M1) according to the previous claim, wherein the operation of inserting (F5.1) of the event (E) relating to the state condition of the occurred storage in the permanent event register (R) of events (E) relating to the digital twin (60) of each metal component (10) prior to storage in the corresponding warehouse (103) is carried out by means of at least one simultaneous and massive operation of detecting the univocal identifying information (A) of the at least one identifier element (20) of each metal component (10) of the corresponding plurality of components to be stored, the entry (F5.1) being carried out by:
- the crossing of the respective metal components (10) through a respective detection gate (101') provided with at least one detecting apparatus, in particular operating in radio frequency, optionally by means of at least one UHF antenna, in particular the crossing of the gate (101') by the metal components (10) being carried out by simultaneously crossing all metal components (10) to be detected or according to a sequential crossing of groups of metal components (10) of the same plurality of components to be detected,
or through the following steps:
- placing the metal components (10) of a relative plurality of components within a corresponding confined detecting region (102') provided with one or more detecting apparatus, in particular operating in radio frequency, optionally by means of at least one UHF antenna, more optionally, the confined detecting region (102) being limited by a controlled chamber;
- detecting, simultaneously and massively, all the univocal identification information (A) of the corresponding identifier elements (20) fixed on the corresponding metal components (10) present in the confined detecting region (102);
or
by using of at least one interaction device (104), in particular portable, provided with at least one detecting apparatus, in particular operating in radio frequency, optionally by means of at least one UHF antenna, the interaction device (104) being configured to communicate with the at least one identifier element (20) of each metal component (10) to simultaneously and massively enter into the permanent registers (R) of events (E) of the corresponding digital twins (60) of the metal components (10), new events (E) related to new status conditions of the respective metal components (10).

7. Method of production and storage (M1) according to any one of the previous two claims, wherein the operation of entering (F5.1) in the permanent register (R) of events (E) related to the digital twin (60) of each metal component (10) of an event (E) related to a state condition of the occurred storage is followed by at least one interaction step (F6) with the identifier element (20) of the respective metal component (10) for inserting in the permanent register (R) of events (E) of the respective digital twin (60) a stationary position (P) of the respective metal component (10) within the warehouse (103), the entry of the stationing position (P) determining a further change of a status condition of the respective metal component (10) from the condition of the occurred storage to the condition of an occurred stationing in the warehouse (103) with an indication of the exact location of the respective stationing position (P).

8. Method of production and storage (M1) according to the previous claim, wherein the one or more metal components (10) stationed in the warehouse (103) are subjected to at least a first loading step (F7), into the permanent event register (R) of events (E) of the respective digital twins (60), of a new event indicative of a change of a status condition from the condition of the occurred staioning within the warehouse (103) to a condition of an occurred assignment of such metal components (10) to a respective fulfillment order (O) of a supply and/or delivery to a third party or a transfer of storage to a physical location other than the respective warehouse (103).

9. Method of production and storage (M1) according to the previous claim, wherein the first loading step (F7) in the permanent register (R) events (E) of the respective digital twins (60), of a new event (E) indicative to the allocation of one or more metal components (10) stationed within the warehouse (103) to a respective fulfillment order (O) is followed by a second loading step (F8) into the permanent register (R) of events (E) of the respective digital twins (60), of a further event (E) indicative of the change of the status condition of each metal component (10) from the condition of the occurred assignment to a condition of execution of the respective evasion order (O), wherein each metal component (10) allocated to such evasion order (O) is transferred from the respective warehouse (103) clearing the respective stationary position (P) occupied therein.

10. Method of production and storage (M1) according to the previous claim when claim 8 depends on claim 7, the interaction step (F6) and/or the first loading step (F7) and/or the second loading step (F8) are carried out by using a respective detecting gate or a respective confined detecting region or at least one interacting device according to claim 8.

11. Scaffolding (1), optionally modular, comprising a plurality of metal components (10) which can be mutually engaged and combined to define the structure of the respective scaffolding (1), the metal components (10) comprising at least a plurality of uprights (11) or a plurality of upright frames (15) and/or a plurality of ledgers/bracings (12) with clamp portions (12c) or a plurality of ledgers/bracings (18) with engagement joints (18a) and/or a plurality of planks (13) and/or a plurality of toeboards (14), **characterized in that** each of said metal components (10) is provided with at least one RFID Tag (30) defining a respective identifier element (20), the at least one RFID Tag (30) of each metal component (10) defining an univocal unique identifying information (A) of the respective metal component (10), the at least one RFID Tag (30) being fixed on each metal component (10), optionally permanently, non-removable, in particular by gluing or welding.
